(19) Europäisches Patentamt
European Patent Office
Office européen des brevets

(11) **EP 2 533 073 A2**

(12) **EUROPÄISCHE PATENTANMELDUNG**

(43) Veröffentlichungstag:
**12.12.2012  Patentblatt 2012/50**

(51) Int Cl.:
***G01V 3/38*** *(2006.01)*

(21) Anmeldenummer: **12168217.3**

(22) Anmeldetag: **16.05.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **07.06.2011  DE 102011077068**

(71) Anmelder: **HILTI Aktiengesellschaft**
**9494 Schaan (LI)**

(72) Erfinder:
• **Winter, Andreas**
  **6800 Feldkirch (AT)**
• **Gogolla, Torsten**
  **9494 Schaan (LI)**
• **Wuersch, Christoph**
  **9470 Werdenberg (CH)**
• **John, Andreas**
  **8892 Berschis (CH)**
• **Schoenbeck, Dietmar**
  **6811 Goefis (AT)**

(54) **Verfahren und Vorrichtung zum Detektieren eines leitfähigen Objektes**

(57)     Die Erfindung betrifft ein Verfahren (900) zum Detektieren eines elektrisch und/oder magnetisch leitfähigen Objektes (200) in einer Umgebung (300) eines Sensorkopfes (101) einer Vorrichtung (100), aufweisend die Schritte:
- Aussenden eines Sendesignals (120) in die Umgebung (300),
- Empfangen eines von dem Sendesignal (120) und den Eigenschaften des Objektes (200) und der Umgebung (300) abhängigen Empfangssignals (122),
- Auswerten eines aus dem Empfangssignal (122) gebildeten Antwortsignals (131). Erfindungsgemäß ist das Detektieren gesteuert durch
- Bereitstellen eines Klassensystems (850) mit einer Anzahl von Klassen (K1-Kn), die sich in mindestens einer Objekt- und/oder Umgebungseigenschaft voneinander unterscheiden,
- Klassifizieren von aktuellen Objekt- und/oder Umgebungseigenschaften in Abhängigkeit des ausgewerteten Antwortsignals (131) in eine Klasse des Klassensystems (850), und
- Vorgeben von in der klassifizierten Klasse voreingestellten Detektionseigenschaften, wobei mit den vorgegebenen Detektionseigenschaften ein weiteres Antwortsignal detektiert wird.

Fig. 1

EP 2 533 073 A2

**Beschreibung**

**Technisches Gebiet**

Die Erfindung betrifft ein Verfahren gemäß dem Oberbegriff des Anspruchs 1 zum Detektieren eines elektrisch und/oder magnetisch leitfähigen Objektes in einer Umgebung eines Sensorkopfes, insbesondere basierend auf einem Pulsinduktionsmessprinzip. Die Erfindung betrifft auch eine Vorrichtung zum Detektieren gemäß dem Oberbegriff des Anspruchs 9.

**Stand der Technik**

Im Bauhaupt- und Hilfsgewerbe als auch bei Renovierungsmaßnahmen wird eine derartige Detektionsvorrichtung, auch Metalldetektor genannt, beispielsweise eingesetzt, um zu überprüfen, ob eine zu durchbohrende Wand metallische Gegenstände beinhaltet oder nicht. Allgemein kann eine Detektionsvorrichtung zum Auffinden elektrisch leitfähiger Gegenstände, wie beispielsweise auch Rohrleitungen, im Boden oder in einer Wand genutzt werden.

Eine eingangs erwähnte Vorrichtung, die im Folgenden auch Detektionsvorrichtung genannt ist, kann grundsätzlich auf verschiedenen Messprinzipien basieren. Ein Messprinzip bildet ein so genanntes Dauerstrich-Verfahren, bei dem ein kontinuierlicher, meist niederfrequenter Strom in einer Sendespule im Frequenzbereich von einigen 10 KHz erzeugt wird. Mittels einer Empfangsspule wird ein Empfangssignal, das aufgrund einer elektromagnetischen Kopplung zwischen einem elektrisch leitfähigen Objekt im Untergrund und dem ausgesendeten Signal entsteht, empfangen und in der Regel im Spektralbereich analysiert. Bei diesem Messprinzip wird entweder ein Messsignal einer einzigen Frequenz ausgesendet oder ein Messsignal, das Signalanteile in verschiedenen Frequenzbereichen umfasst. Eine Detektionsvorrichtung, die auf dem soeben beschriebenen Messprinzip basiert, wird auch als CW-Metalldetektor bezeichnet, wobei CW für "Continuous Wave" steht.

Eine Detektionsvorrichtung kann auch auf einem so genannten Pulsinduktionsmessprinzip basieren. Dabei erzeugt in der Regel ein Pulsgenerator einen pulsartigen elektrischen Strom, mit welchem eine Spule eines Senders, auch Sendespule genannt, beaufschlagt wird. Dadurch wird ein gepulstes Magnetfeld erzeugt, das auf ein sich im Untergrund befindliches leitfähiges Objekt trifft. Gemäß elektromagnetischen Wechselwirkungen induziert das gepulste Magnetfeld in dem elektrisch leitfähigen Objekt einen Wirbelstrom, der in Abhängigkeit des Sendestrom-Pulsmusters nach einer gewissen Zeit abklingt. Der induzierte Wirbelstrom im elektrisch leitfähigen Objekt erzeugt sodann ein sekundäres Magnetfeld, das von einem Empfänger, z. B. einer Spule, in der Detektionsvorrichtung empfangen wird. In der Regel erfolgt der Empfang dieses sekundären Magnetfeldes mittels einer Empfangsspule genannten Spule des Empfängers, in der das sekundäre Magnetfeld einen Empfangsstrom induziert, der sodann von einem der Empfangsspule nachgeschalteten Verstärker verstärkt wird. Das verstärkte Empfangssignal ist dann auf ein so genanntes Gate geführt, das eine zeitliche Schranke darstellt. Das Gate wird von einer vorbekannten Detektionsvorrichtung derart betrieben, dass es nur für einen ganz bestimmten Zeitraum nach dem Beaufschlagen der Sendespule mit einem Strompuls geöffnet wird. Beispielsweise ist zwischen Pulsgenerator und Gate eine Verzögerungseinheit geschaltet, die ein Öffnen des Gates nach einer festgelegten Zeit nach dem Auslösen des Sendestrompulses veranlasst. Die Funktion des Gates ist es demnach, einen Einfluss des direkt empfangenen Sendeimpulses zu eliminieren und es der Empfangsspule ermöglicht, dennoch das sekundäre Magnetfeld zu erfassen. Das Ausgangssignal des Gates wird dann in der Regel von einem Integrator integriert, der das kumulative Signal über mehrere Pulse hinweg summiert und dann dieses Signal für eine Anzeigevorrichtung verfügbar macht. Eine Detektionsvorrichtung, die auf diesem Messprinzip basiert, wird auch als PI-Metalldetektor bezeichnet, wobei PI für "Pulse Induction" steht.

In Abhängigkeit des Einsatzgebietes der Detektionsvorrichtung und in Abhängigkeit von Anforderungen, die an die Detektionsvorrichtung gestellt werden, wie beispielsweise Genauigkeit und/oder Energieverbrauch, wird wahlweise das eine oder das andere der beiden oben dargestellten Messprinzipien implementiert. Aus der Veröffentlichung DE 699 17 030 T2 ist ein Metalldetektor bekannt, der sowohl das CW- als auch das PI-Messprinzip durchführen kann. Der dort beschriebene Metalldetektor hat eine Sendeeinheit mit einer Anzahl Sendespulen und eine Empfangseinheit mit einer Anzahl Empfangsspulen. Außerdem umfasst der Metalldetektor eine so genannte Signalverarbeitungseinrichtung zum Korrigieren von Verschiebungen bei gemessenen Komponenten von Empfangs-Magnetfeld-Gradienten. Beispielsweise wird so ein Empfangssignal, welches auf Grund einer nicht korrekten orthogonalen Ausrichtung von Empfangsspulen im Empfänger des Metalldetektors verfälscht worden ist, nachkorrigiert. Dies kann jedoch sehr zeitaufwändig sein.

Nachteilig bei allen bisher bekannten Ansätzen zur Detektion von leitfähigen Objekten ist auch, dass die eingesetzten Detektionsvorrichtungen mit fest vorgegebenen Einstellungen arbeiten, z. B. beim PI-Messprinzip mit fest vorgegebenen Puls-Sequenzen und Messzeiten arbeiten. Fest vorgegebene Einstellungen passen regelmäßig nicht auf konkrete zu detektierende Objektsituationen. Eine zu niedrige Messsensibilität einer Detektionsvorrichtung für eine wenig Antwortpotenzial aufweisende Objektsituation kann nur durch erhöhten Messaufwand ausgeglichen werden. Bei einer ein hohes Antwortpotenzial aufweisenden Objektsituation führt eine zu hohe Messsensibilität zu einer ständigen Sättigung eines Empfängers in der Detektionsvorrichtung. Dies kann ebenfalls erhöhten Messaufwand erforderlich machen, um ein elektrisch und/oder magnetisch leitfähiges Objekt in einer Umgebung genauer zu lokalisieren und/oder genauer in seinen Eigenschaften zu beurteilen. Insgesamt geht Messzeit verloren, die besser genutzt werden könnte.

Wünschenswert ist es ein elektrisch und/oder magnetisch leitfähiges Objekt bei hoher Detektionsqualität dennoch mit weniger Zeitaufwand zu detektieren.

**Darstellung der Erfindung**

An dieser Stelle setzt die Erfindung an, deren Aufgabe es ist, ein Verfahren und eine Vorrichtung zum Detektieren eines elektrisch und/oder magnetisch leitfähigen Objektes in einer Umgebung eines Sensorkopfes anzugeben, wobei das elektrisch und/oder magnetisch leitfähige Objekt in seiner Umgebung besser in Bezug auf Objekt- und/oder Umgebungseigenschaften detektierbar sein sollte.

Die Aufgabe betreffend das Verfahren wird durch die Erfindung mittels einem Verfahren der eingangs genannten Art gelöst, bei der erfindungsgemäß auch die Merkmale des kennzeichnenden Teils des Anspruchs 1 vorgesehen sind.

Konkret ist ein Verfahren zum Detektieren eines elektrisch und/oder magnetisch leitfähigen Objektes in einer Umgebung eines Sensorkopfes einer Vorrichtung vorgesehen, aufweisend die Schritte:

- Aussenden eines Sendesignals in die Umgebung,
- Empfangen eines von dem Sendesignal und den Eigenschaften des Objektes und der Umgebung abhängigen Empfangssignals,
- Auswerten eines aus dem Empfangssignal gebildeten Antwortsignals und Steuern des Sendens und Empfangens.

Erfindungsgemäß sind weiter die Schritte vorgesehen:

- Bereitstellen eines Klassensystems mit einer Anzahl von Klassen, die sich in mindestens einer Objekt- und/oder Umgebungseigenschaft voneinander unterscheiden, und
- Klassifizieren von aktuellen Objekt- und/oder Umgebungseigenschaften in Abhängigkeit des Antwortsignals in eine Klasse des Klassensystems,
- Vorgeben von in der klassifizierten Klasse voreingestellten Detektionseigenschaften, wobei mit den vorgegebenen Detektionseigenschaften ein weiteres Antwortsignal detektiert wird.

Das Konzept der Erfindung vorteilhaft weiterbildend erfolgt die Klassifizierung insbesondere adaptiv, d. h. angepasst auf die aktuellen Objekt- und/oder Umgebungseigenschaften. Beispielsweise kann eine das Klassensystem nutzende Logik als eine Support-Vektor-Maschine und/oder eine Fuzzy-Logik und/oder ein neuronales Netzwerk zur adaptiven Klassifizierung ausgebildet sein. Die das Detektionsverfahren und eine Messumgebung einer Detektionsvorrichtung bestimmenden Detektionseigenschaften sind dann in besonders bevorzugter Weise auf die Objekt- und/oder Umgebungseigenschaften angepasst, was die Detektion insgesamt verbessert. So hat es sich als besonders bevorzugt erwiesen, dass die Detektionseigenschaften umfassen: Sendeeigenschaften und/oder Empfangseigenschaften und/oder Auswerteeigenschaften. Bevorzugt wird das Detektieren gesteuert, indem mit den eingestellten Sendeeigenschaften ein weiteres Sendesignal ausgesendet, und/oder mit den eingestellten Empfangseigenschaften ein weiteres Empfangssignal empfangen, und/oder mit den eingestellten Auswerteeigenschaften das weitere Empfangssignal und/oder das aus dem weiteren Empfangssignal gebildete weitere Antwortsignal ausgewertet wird.

Ein elektrisch und/oder magnetisch leitfähiges Objekt kann insbesondere genauer lokalisiert werden und/oder genauer in seinen Eigenschaften beurteilt werden. Insbesondere werden weniger Fehlalarme bei einer Detektion ausgelöst. Die Detektionsgenauigkeit und Schnelligkeit gegenüber aus dem Stand der Technik bekannten Detektionsvorrichtungen und Detektionsverfahren ist aufgrund der adaptierten Vorgabe von Detektionseigenschaften erhöht. Insbesondere lässt sich ein Detektionsverfahren damit effektiver gestalten. Im Ergebnis lässt sich ein Zeitaufwand zur Detektion bei dennoch verbesserter Genauigkeit verringern.

Die Aufgabe betreffend die Vorrichtung wird durch die Erfindung mittels einer Vorrichtung der eingangs genannten Art gelöst, bei der erfindungsgemäß auch die Merkmale des kennzeichnenden Teils des Anspruchs 9 vorgesehen sind.

Insbesondere zur Ausführung des erfindungsgemäßen Verfahrens sieht die Vorrichtung zum Detektieren eines elektrisch und/oder magnetisch leitfähigen Objektes in einer Umgebung eines Sensorkopfes der Vorrichtung vor:

- eine Sendeeinheit, die einen oder mehrere Sender aufweist und zum Aussenden eines Sendesignals in die Umgebung ausgebildet ist,
- eine Empfangseinheit, die einen oder mehrere Empfänger aufweist und zum Empfangen eines von dem Sendesignal und den Eigenschaften des Objektes und der Umgebung abhängigen Empfangssignals ausgebildet ist,

- eine Steuer- und Auswerteeinheit, die zum Steuern der Sende- und Empfangseinheiten und zum Auswerten eines von der Empfangseinheit aus dem Empfangssignal gebildeten Antwortsignals ausgebildet ist.

Erfindungsgemäß weist die Vorrichtung weiter auf:

- eine ein Klassensystem nutzende Klassifizierungseinheit, in der Objekt- und/oder Umgebungseigenschaften in Klassen klassifiziert sind, wobei
das Klassensystem eine Anzahl von Klassen aufweist, die sich in mindestens einer Objekt- und/oder Umgebungseigenschaft voneinander unterscheiden, und wobei einer Klasse voreingestellte Detektionseigenschaften für die Vorrichtung zugeordnet sind.

Die Erfindung geht von der Überlegung aus, dass vorbekannte Detektionsvorrichtungen der eingangs genannten Art jeweils mit einem grundsätzlich festgelegten Sendesignal operieren, das nicht in Abhängigkeit der Beschaffenheit der Umgebung, der Beschaffenheit des zu detektierenden elektrisch und/oder magnetisch leitfähigen Objektes und/oder der Lage der Detektionsvorrichtung in Bezug zur Umgebung angepasst ist. Ferner hat die Erfindung erkannt, dass bei vorbekannten Detektionsvorrichtungen nicht nur das ausgesendete Sendesignal grundsätzlich festgelegt ist, sondern auch die Mittel und Verfahren zum Empfangen des Empfangssignals aus der Umgebung nicht an die aktuelle Umgebung, das zu detektierende elektrisch und/oder magnetisch leitfähige Objekt und/oder an die Lage der Detektionsvorrichtung in Bezug zur Umgebung angepasst wird. Bei vorbekannten Detektionsvorrichtungen findet demnach keine von den aktuellen Objekt- und/oder Umgebungseigenschaften abhängige Steuerung oder Regelung der Detektionsvorrichtung, insbesondere nicht des Senders oder des Empfängers, statt. Außerdem nehmen die Messungen bei den vorbekannten Detektionsvorrichtungen vergleichsweise viel Zeit in Anspruch, was grundsätzlich nachteilig ist. In Abkehr von insofern als nicht-adaptiv zu bezeichnenden Detektionsvorrichtungen des Standes der Technik sieht das Konzept der Erfindung aufgrund der Klassifizierung ein automatisches Klassifizierungsverfahren im Rahmen des Detektionsverfahrens vor, das eine Messumgebung der Vorrichtung und die damit verknüpften Detektionseigenschaften an aktuelle Objekt- und/ oder Umgebungseigenschaften anpasst.

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren. Dies betrifft insbesondere Weiterbildungen der Vorrichtung und des Verfahrens.

Die Umgebungseigenschaften umfassen insbesondere Untergrundeigenschaften. Die Objekteigenschaften umfassen insbesondere Materialeigenschaften und/oder Geometrieeigenschaften des Objektes. Besonders vorteilhaft ist die Vorgabe einer Eigenschaftsdimension und einer dazugehörigen Kategorie einer Eigenschaft in der Eigenschaftsdimension. Die Eigenschaftsdimension einerseits und die Kategorie andererseits lassen sich als Feldparameter für eine Matrix oder dergleichen mehrdimensionales Feld nutzen. Die Einträge einer solchen Matrix können zur Darstellung von Klassen eines Klassensystems in der Klassifizierungseinheit genutzt werden. Die Eigenschaftsdimension kann insbesondere ausgewählt sein aus der Gruppe:

- Geometrie oder Lage eines Objektes in einer Umgebung;
- Beschaffenheit einer Umgebung, insbesondere eines Untergrundes oder einer Wand;
- Materialeigenschaften eines Objektes, insbesondere Leitfähigkeit und Permeabilität;
- Geometrieeigenschaften eines Objektes, insbesondere Verteilung und Verteilungsdichte mehrerer Objekte oder eines größeren Objektes.

Der Umgebung werden hinsichtlich der Materialzusammensetzung nachfolgend Beschaffenheiten zugeordnet. Die Beschaffenheit der Umgebung kann z. B. einen Beton oder eine erdige Zusammensetzung betreffen. Dem Objekt werden nachfolgend Materialeigenschaften zugeordnet. Die Materialeigenschaft umfasst insbesondere eine chemische Materialeigenschaft, wie das Material als solches, und eine physikalische Materialeigenschaft, wie die Leitfähigkeit oder Permeabilität, des Objektes. Geometrieeigenschaften des Objektes, wie die Verteilung, kann eine Ausbreitung eines einzelnen Objektes betreffen, wie z. B. die Ausbreitung eines Gitters. Die Verteilungsdichte kann ein einzelnes Objekt, z. B. eine Maschendichte eines einzelnen Gitters, oder eine Häufung mehrerer kleiner Objekte betreffen, wie z. B. die Verteilungsdichte von körnigen elektrisch und/oder magnetisch leitfähigen Objekten.

Die Klassifizierungseinheit ist bevorzugt mit der Sendeeinheit und/oder der Empfangseinheit direkt oder mittelbar steuerverbunden. Insbesondere ist die Klassifizierungseinheit mit einer Steuer- und Auswerteeinheit steuerverbunden, die eine Steuereinheit und eine Auswerteeinheit aufweist. Die Auswerteeinheit ist vorgesehen, um ein aus dem Empfangssignal gebildetes Antwortsignal auszuwerten und insbesondere an die Klassifizierungseinheit weiterzugeben. Insofern ist die Klassifizierungseinheit auch in eine Steuereinheit eingebunden oder an eine Steuereinheit angeschlossen. Die Steuereinheit kann, insbesondere nach Massgabe der Klassifizierungseinheit, steuernde Vorgaben an eine Stellgröße wenigstens für die zuvor genannten Sendeeinheit und/oder der Empfangseinheit machen. Die Stellgröße muss zunächst nicht notwendigerweise unter Rückkopplung einer Abweichung zwischen Führungs- und Regelgröße einer Regelung einstellbar sein. Gleichwohl kann die Klassifizierungseinheit auch in einer Regelung eingebunden oder an eine Regeleinheit einer Regelung angeschlossen sein. Bevorzugt ist eine Regelung in der Lage, insbesondere innerhalb einer Klasse des Klassensystems, vorgegebene Detektionseigenschaften, insbesondere für eine Sendeeinheit und/oder der Empfangseinheit und/oder Auswerteeinheit, als Stellgröße unter Rückkopplung einer Abweichung zwischen Führungs- und Regelgröße regelnd anzupassen. Als Regelgröße kann beispielsweise ein Antwortsignal dienen. Als Führungsgröße kann beispielsweise eine bestimmte Amplitude oder ein gewisses Signal-zu-Rausch-Verhältnis eines Antwortsignals vorgegeben sein. Das Signal-zu-Rausch-Verhältnis kann mittels eines Wertes für ein Signal-to-Noise Ratio (SNR-Wert) angegeben werden. Die Detektionseigenschaften umfassen bevorzugt auch Regeleigenschaften mittels der ein Antwortsignal in einem Regelschritt automatisch geregelt werden kann und/oder Abbruchbedingungen mittels der ein Regelschritt beendet werden kann.

Die Detektion, insbesondere Klassifizierung und/oder Regelung, kann vollautomatisch (ohne manuellen Eingriff) erfolgen. Insbesondere kann unter Mittelung des Antwortsignals klassifiziert werden. Die Mittelung erhöht die Verlässlichkeit einer Klassifizierung.

Die Detektion, insbesondere Klassifizierung und/oder Regelung, kann halbautomatisch (mit manuellem Eingriff) erfolgen. Insbesondere können Objekt- und/oder Umgebungseigenschaften mehrfach neu klassifiziert werden, falls ein Nutzer eine Verzögerung oder ein unzureichendes Ergebnis eines Detektionsvorganges erkennen sollte. Vorzugsweise kann bei Vorliegen einer Abbruchbedingung ein Regelschritt beendet und eine Startgruppe von Detektionseigenschaften eingestellt wird.

Die Vorteile einer Klassifizierung können beispielhaft an einem ausgesendeten elektromagnetischen Sendesignal erläutert werden, das auf die Umgebung und gegebenenfalls auf das zu detektierende Objekt trifft. Dabei kommt es zur elektromagnetischen Wechselwirkung zwischen dem Sendesignal und der Umgebung sowie dem Objekt. Entsprechend fällt das Antwortsignal aus. Insbesondere kann die Empfangseinheit ausgebildet sein, das Antwortsignal aus einem elektromagnetischen Sekundärfeld abzuleiten, das durch vom zuvor ausgesendeten elektromagnetischen Sendesignal hervorgerufene Wirbelströme in der Umgebung und insbesondere in dem zu detektierenden Objekt entstanden ist, abzuleiten. Dazu umfasst die Empfangseinheit beispielsweise eine Empfängerspule, einen Verstärker mit einem analogen Filter, ein Gate, einen Integrator und einen Analog-Digital-Wandler (AD-Wandler). Das Gate dient dazu, den Einfluss des direkt empfangenen Sendeimpulses zu eliminieren und wird mittels einer Verzögerungseinheit geschaltet, wobei die Verzögerungseinheit ein Öffnen des Gates zu einem Startzeitpunkt (Gate-Startzeitpunkt), d.h. nach einer festgelegten Zeit nach dem Auslösen des Sendeimpulses, für eine Zeitdauer (Gate-Zeitdauer) veranlasst. Das Ausgangssignal des Gates wird von dem analogen Filter gefiltert, von dem Verstärker verstärkt und von dem Integrator integriert, der das kumulative Signal über eine Mittelungszeit bzw. im PI-Modus über mehrere Pulse (Anzahl der Mittelungszyklen) hinweg summiert. Das analoge Filter ist beispielsweise ein Sallen-Key-Filter, dessen Filterstruktur (Filtereigenschaften) mit Hilfe der Steuer- und Auswerteeinheit an eine Objekt- und/oder Umgebungseigenschaft anpassbar ist. Der Verstärker ist über seine Verstärkereigenschaften an eine Objekt- und/oder Umgebungseigenschaft anpassbar ausgebildet. Eine Filterung und Integration kann alternativ oder zusätzlich von einem digitalen Filter bzw. einem digitalen Integrator der Steuer- und Auswerteeinheit durchgeführt werden. Bei digitaler Filterung und Integration sind die Eigenschaften des digitalen Filters (Filterkoeffizienten) und des digitalen Integrators (Mittelungszeit, Integrationszeit) anpassbar ausgebildet.

Vorteilhaft durch Analyse des Antwortsignals kann - beispielsweise mittels der Klassifizierungseinheit, insbesondere zusammen mit der Steuer- und Auswerteeinheit - auf die Beschaffenheit der Umgebung und/oder auf die Materialeigenschaften des zu detektierenden Objektes geschlossen werden und dieses klassifiziert werden. Es kann auch auf die relativen Eigenschaften zwischen einem Sensorkopf und dem Objekt oder Geometrieeigenschaften des Objektes geschlossen werden. Generell können aktuell vorliegende Objekt- und/oder Umgebungseigenschaften in ein zur Verfügung gestelltes Klassensystem eingeordnet werden, indem die aktuell vorliegenden Objekt- und/oder Umgebungseigenschaften einer Klasse des Klassensystems zugeordnet werden. Es kann dann eine für die entsprechend der Klasse vorgegebene, und damit eine für die aktuelle Objekt- und/oder Umgebungseigenschaft besonders geeignete, Detektionseigenschaft, z. B. eine besonders geeignete Spulenkonfiguration, ausgewählt werden, d. h. vorzugsweise diejenige, welche der klassifizierten Klasse zugeordnet ist.

Die Detektionsvorrichtung kann auf verschiedenen Messprinzipien basieren, wie beispielsweise auf dem CW-Messprinzip oder auf dem PI-Messprinzip oder auf beiden dieser Messprinzipien. Ein ausgesendetes elektromagnetisches Sendesignal ist wahlweise ein gepulstes Signal oder ein kontinuierliches Signal. Die Sendeeinheit der Detektionsvorrichtung weist bevorzugt eine entsprechende Stromstellvorrichtung auf, die ausgebildet ist, beispielsweise jede der Anzahl Sendespulen unabhängig von den jeweils übrigen Sendespulen mit einem elektrischen Strom einer bestimmten Form zu beaufschlagen.

Bevorzugt basiert die vorliegende Detektionsvorrichtung auf dem PI-Messprinzip. Demnach nutzt ein Detektionsverfahren gemäß dem Konzept der Erfindung bevorzugt ein Pulsinduktionsmessprinzip, bei dem ein erzeugtes Sendesignal eine elektromagnetische Impulsfolge, gegebenenfalls auch nur einen einzigen Puls, aufweist.

Im Rahmen der Beschreibung meint Detektieren wenigstens das Signalisieren einer Anwesenheit eines zu detektierenden Objektes in einer Umgebung. Ein verbessertes Detektieren, wozu die Detektionsvorrichtung bevorzugt ebenfalls ausgebildet ist, signalisiert nicht nur die Anwesenheit des zu detektierenden Objektes im Untergrund, sondern ermöglicht auch Angaben, die auf die Lokalisierung des detektierten Objektes in der Umgebung schließen lassen, und/ oder Angaben, die auf die geometrische und/oder stoffliche Beschaffenheit des detektierten Objektes und/oder der Umgebung schließen lassen.

Ein elektrisch und/oder magnetisch leitfähiges Objekt meint insbesondere ein Objekt, das auf Grund seiner stofflichen Beschaffenheit auf ein von der Sendeeinheit der Detektionsvorrichtung ausgesendetes elektromagnetisches Sendesignal wesentlich anders reagiert als die Umgebung. In der Regel ist es so, dass die elektrische und/oder magnetische Leitfähigkeit des zu detektierenden Objektes sehr viel größer ist als die elektrische und/oder magnetische Leitfähigkeit der Umgebung, in der es sich befindet. Ein Beispiel dafür ist ein Eisenträger in einer Betonwand oder eine Rohrleitung in der Erde. Auf Grund dieser Eigenschaft ist die Wechselwirkung zwischen dem elektromagnetischen Sendesignal und dem zu detektierenden Objekt sehr viel ausgeprägter als die Wechselwirkung der Umgebung mit dem elektromagnetischen Erregersignal. Das elektrisch und/oder magnetisch leitfähige Objekt in einer Umgebung kann beispielsweise ein verschweißtes Gitter, Stromkabel, wie ein Kupferkabel, ein Metallrohr, eine Platte, ein Eisenträger, ein Armierungseisen, eine Münze, ein Projektil, oder eine Mine sein - grundsätzlich jedes in einem Untergrund eingebettetes elektrisch und/oder magnetisch leitfähiges Objekt. Die Umgebung, in der das elektrisch und/oder magnetisch leitfähige Objekt liegt, ist in der Regel ein Untergrund, wie ein erdiger Untergrund oder eine Wand, ein Boden oder ein Dach oder eine Decke in einem Gebäude oder in einem entstehenden Gebäude. Ein zu detektierendes elektrisch und/ oder magnetisch leitfähiges Objekt befindet sich vorzugsweise in der Nähe des Sensorkopfes der Detektionsvorrichtung. Vorzugsweise liegt zwischen dem Sensorkopf der Detektionsvorrichtung und dem zu detektierenden leitfähigen Objekt regelmäßig ein Abstand von etwa einem Millimeter bis zu einigen Metern, ggfs. bis zu 5 m. Gewöhnlich beträgt der Abstand zwischen 5 cm und 3 m.

Besonders bevorzugt klassifiziert eine das Klassensystem nutzende Logik - bevorzugt eine Support-Vector- Maschine und/oder eine Fuzzy-Logik und/oder ein neuronales Netzwerk - aktuelle Objekt- und/oder Umgebungseigenschaften in Abhängigkeit des Antwortsignals adaptiv. Insbesondere hat es sich als vorteilhaft erwiesen, ein eigens zum Zwecke der Klassifizierung der Objekt- und/oder Umgebungseigenschaften vorgesehenes Antwortsignal, im Folgenden auch Vorantwortsignal genannt, zu erzeugen. In diesem Zusammenhang werden im Folgenden die nach einer Klassifizierung mittels dem Vorantwortsignal erzeugten Antwortsignale als Hauptantwortsignale bezeichnet.

Im Rahmen einer besonders bevorzugten Weiterbildung ist ein Sender in Form einer Spule gebildet. Bei einer bevorzugten Sendeeinheit ist jede der Anzahl von vorzugsweise gebildeten Sendespulen unabhängig von den jeweils übrigen Sendespulen beispielweise mit einem elektrischen Strom beaufschlagbar. Besonders vorzugsweise kann eine Auswerteeinheit ausgebildet sein, in Abhängigkeit des Vorantwortsignals eine Spulenkonfiguration zu bestimmen, d. h. auszuwählen, welche wenigstens eine Sendespule der Anzahl Sendespulen zum Aussenden eines weiteren Sendesignals mit einem elektrischen Strom beaufschlagt wird. Im Zusammenhang einer bevorzugten Sendeeinheit in Form einer Sendespule wird das Sendesignal auch als Erregersignal bezeichnet. Bevorzugt können eine Sendespule und eine Empfangsspule in einer Spulenkonfiguration integriert sein oder - alternativ oder zusätzlich - mittels einer selben Spule gebildet sein, die einmal in einem Sendebetrieb und einmal in einem Empfangsbetrieb geschaltet wird.

Beispielsweise mit einer Sendeeinheit allgemeiner Art - bevorzugt vorgenannter Art auf Basis einer Spule - kann die Genauigkeit der Detektionsvorrichtung erhöht werden, wenn die Detektionsvorrichtung in einem Vormessbetrieb zunächst ein erstes Sendesignal, das im Falle einer Sendespule als ein Erregersignal bezeichnet wird, aussendet und ein Vorantwortsignal empfängt, das von der Beschaffenheit der Umgebung und von dem ausgesendeten Sendesignal abhängig ist. Sodann kann zeiteffektiv in einem Hauptmessbetrieb - z.B. mittels einer Spulenkonfiguration, die in Abhängigkeit zum Vorantwortsignal bestimmt worden ist - ein auf die Umgebung und auf das zu detektierende elektrisch und/oder magnetisch leitfähige Objekt angepasstes weiteres Sendesignal ausgesendet werden und erst dann das Hauptantwortsignal verwendet werden, um das elektrisch und/oder magnetisch leitfähige Objekt tatsächlich über ein Empfangssignal zu detektieren und ein entsprechendes Antwortsignal an eine Steuer- und Auswerteeinheit der Detektionsvorrichtung auszugeben.

Im Rahmen der Beschreibung bezeichnen ein Sendesignal im Allgemeinen und ein Erregersignal im Besonderen bevorzugt jeweils ein Signal, das die Detektionsvorrichtung aussendet; insbesondere nachdem diese das Vorantwortsignal erfasst hat und die wenigstens eine Sendespule ausgewählt hat, wird das Signal auch als Hauptantwortsignal bezeichnet. Zunächst ergibt sich ein von einem Sendesignale generiertes Empfangssignal außerhalb der Detektionsvorrichtung aufgrund einer hauptsächlich vom Objekt bewirkten Signaländerung, beispielsweise weil das elektrisch und/oder magnetisch leitfähige Objekt dem Sendesignal Energie entzieht. Das in einer Empfangseinheit empfangene Empfangssignal generiert ein Antwortsignal. Unter einem Antwortsignal kann also insbesondere ein Vorantwortsignal oder ein Hauptantwortsignal oder sowohl das Vorantwortsignal und das Hauptantwortsignal gemeint sein. Das Vorantwortsignal und/oder das Hauptantwortsignal können Antwortsignale sein, die mittels einer Empfangseinheit aufgrund von tatsächlich von der Umgebung und/oder dem elektrisch und/oder magnetisch leitfähigen Objekt zur Detektionsvorrichtung zurückgesendeten Empfangssignal erzeugt werden, beispielsweise gemäß dem oben erläuterten PI-Messprinzip.

Eine Weiterbildung hat erkannt, dass für bestimmte Umgebungen und/oder für bestimmte zu detektierende Objekte bestimmte Sende- oder Erreger-Signalformen besser geeignet sind als vorab festgelegte Signalformen, um das betreffende elektrische und/oder magnetisch leitfähige bestimmte Objekt in der bestimmten betreffenden Umgebung zu detektieren. Beispielsweise hat die Weiterbildung erkannt, dass zum Detektieren eines maschenartigen verschweißten Gitters in einer Betonwand eine ganz andere Sendesignalform geeignet ist als zum Detektieren einer Münze in einem erdigen Boden. Eine erste Erregersignalform lässt sich beispielsweise mit einer ersten bestimmten Spulenkonfiguration erzielen und eine andere zweite Erregersignalform mit einer zweiten bestimmten Spulenkonfiguration.

Im Rahmen einer besonders bevorzugten Weiterbildung ist insbesondere eine Klassifizierungseinheit ausgebildet, aufgrund des Vorantwortsignals eine insofern vermutete Objekt- und/oder Umgebungseigenschaft zu klassifizieren und in Abhängigkeit eines darauf gewonnenen Klassifizierungsergebnisses eine Voreinstellung der Detektionsvorrichtung vorzugeben. Dies erfolgt aufgrund der vorzugsweise jeder Klasse zugeordneten-Sendeeigenschaften für die Sendeeinheit und/oder Empfangseigenschaften für die Empfangseinheit und/oder Auswerteeigenschaften für die Steuer- und Auswerteeinheit.

Vorzugsweise umfassen die Sendeeigenschaften der Sendeeinheit für jede Klasse des Klassensystems und für jeden Sender der Sendeeinheit Senderparameter, mit denen jeder der Sender betreibbar ist. Insbesondere umfassen die Senderparameter einen oder mehrere der Parameter, die ausgewählt sind aus der Gruppe bestehend aus: Pulsrepetitionsfrequenz, Pulsamplitude, Pulspolarität, Bestromungsdauer. Diese Parameter betreffen insbesondere den Betrieb einer Sendespule oder dergleichen im PI-Modus. Das Sendesignal kann so im Hinblick auf eine Objekt- und/oder Umgebungseigenschaft optimiert werden.

Vorzugsweise umfassen die Empfangseigenschaften der Empfangseinheit für jede Klasse des Klassensystems und für jeden Empfänger der Empfangseinheit Empfängerparameter, mit denen jeder der Empfänger betreibbar ist. Insbesondere umfassen die Empfängerparameter einen oder mehrere der Parameter, die ausgewählt sind aus der Gruppe bestehend aus: Filtereigenschaften, Verstärkereigenschaften, Gate-Startzeitpunkt und Gate-Zeitdauer, Mittelungszeit bzw. Anzahl der Mittelungszyklen. Diese Parameter betreffen insbesondere den Betrieb einer Empfängerspule im PI-Modus. Vorzugsweise kann je nach Signalstärke und Rauschzustand des Antwortsignals eine Anzahl von Mittelungszyklen optimiert werden und so kann entweder das Antwortsignal verbessert werden oder Zeit gespart werden.

Vorzugsweise umfassen die Auswerteeigenschaften für die Steuer- und Auswerteeinheit für jede Klasse des Klassensystems einen oder mehrere der Parameter, die ausgewählt sind aus der Gruppe bestehend aus: Mittelungszeiten, Integrationszeiten, Filterkoeffizienten. Die Auswertung eines Antwortsignals kann so im Hinblick auf eine Objekt- und/oder Umgebungseigenschaft optimiert werden.

Im Rahmen der vorgenannten Weiterbildungen können zudem auch gewisse grundsätzliche, die Messung betreffende, Einstellungen, wie das Auswählen der wenigstens einen Sendespule und/oder das Bestimmen des Messverfahrens, vorgenommen werden. Darüberhinaus können die oben genannten Eigenschaften, bevorzugt das Festlegen der Abtastrate, der Verstärkung, der Bestromungsdauer, des Messzeitraums und/oder des Maximalstroms, voreingestellt werden.

Mittels der Klassifizierungseinheit kann demnach - vorzugsweise basierend auf einem erfassten Vorantwortsignal (ggfs. auch basierend auf einer mehr oder weniger willkürlichen Schätzung - auf eine tatsächliche Objekt- und/oder Umgebungseigenschaft einer bestimmten Klasse geschlossen werden. Die Klassifizierungseinheit kann adaptiv für die Objekt- und/oder Umgebungseigenschaften eine jeweilige Klasse bestimmen, d.h. darüber eine den tatsächlichen Objekt- und/oder Umgebungseigenschaften adaptierte Messumgebung für die Detektionsvorrichtung vorgeben, indem in der klassifizierten Klasse voreingestellten Detektionseigenschaften vorgegeben werden. Die Detektionseigenschaften umfassen vorzugsweise, sind aber nicht beschränkt auf, in der klassifizierten Klasse voreingestellten Sendeeigenschaften, Empfangseigenschaften und/oder Auswerteeigenschaften. So kann eine Messumgebung für die Detektionsvorrichtung beispielsweise auf die Beschaffenheit der Umgebung des Objektes und/oder die Beschaffenheit des zu detektierenden Objektes angepasst werden. Beispielsweise können entsprechende Klassen mit einer Messumgebung für einen "hochpermeabler Untergrund" vorgesehen sein. Es können auch relative Eigenschaften zwischen Sensorkopf der Detektionsvorrichtung und Objekt, wie z. B. eine Distanz zwischen Sensorkopf und Objekt oder eine geometrische Anordnung des Sensorkopfes relativ zum Objekt in der angepassten Messumgebung berücksichtigt werden. So kann z. B. eine Messumgebung für eine Lage oder Geometrie des Objektes in der Umgebung angepasst werden. Beispielsweise können entsprechende Klassen mit einer Messumgebung für ein "maschenartiges Geflecht" als Objekt vorgesehen sein. Dadurch, dass Objekt- und/oder Umgebungseigenschaften in Klassen eingeteilt werden, kann eine strukturierte Anpassung der Detektionsvorrichtung mittels einer der Detektionseigenschaften erfolgen.

Insbesondere kann die Detektionsvorrichtung in Abhängigkeit der aktuellen Klasse auch eine automatische Untergrund-Kompensation durchführen, bei der die Empfangseinheit durch den Untergrund hervorgerufene Störanteile im Antwortsignal eliminiert. Dazu kann für die Empfangseinheit beispielsweise eine bestimmte Bestromungsdauer festgelegt und/oder eine bestimmte Spulenkonfiguration ausgewählt werden. Für jede Klasse kann demnach nicht nur bereits bestimmt sein, welche bestimmte Spulenkonfiguration und/oder welches bestimmte Messverfahren vorzugeben ist. Darüberhinaus kann vorzugsweise wenigstens eine Abtastrate, Verstärkung, Bestromungsdauer, Messzeitraum und/oder ein Maximalstrom für die Detektionsvorrichtung im Hauptmessbetrieb festgelegt sein.

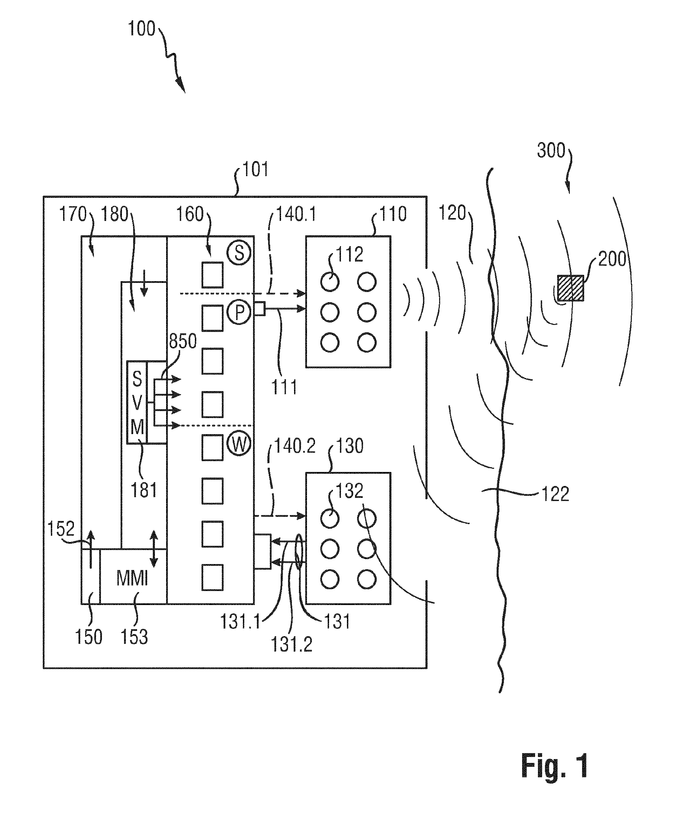

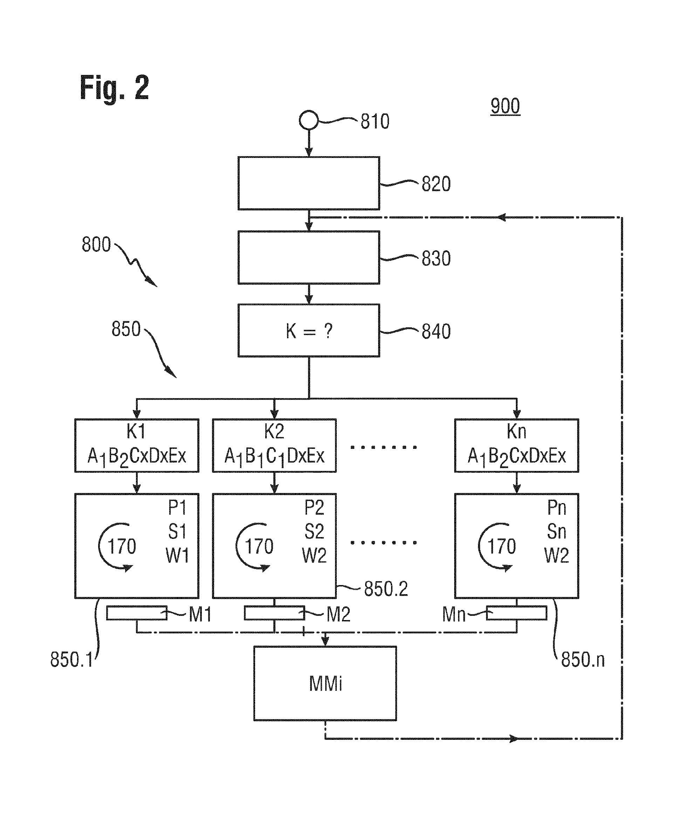

Bei der zuvor genannten Weiterbildung der Detektionsvorrichtung ist die Klassifizierungseinheit ausgebildet, aus dem Vorantwortsignal einen Wert wenigstens eines Klassifizierungsparameters, auch Kategorie genannt, für eine Eigenschaftsdimension zur Darstellung der Klassen eines Klassensystems zu bestimmen. So kann ein Feld von Klassen aufgespannt werden, wobei eine Eigenschaftsdimension auf einer ersten Achse des Feldes und eine Kategorie für eine Eigenschaftsdimension auf einer zweiten Achse des Feldes vorgesehen sind. Ein Feld von Klassen ist darüberhinaus nicht auf zwei Achsen beschränkt. Ein Klassifizierungsparameter kann insbesondere für eine Eigenschaftsdimension wie die geometrische Eigenschaft eines Objektes (z. B. klein, groß, Gitter), für eine elektrische und/oder magnetische Leitfähigkeit (z. B. hoch, niedrig) oder sonstige Materialeigenschaft eines Objektes und/oder der Umgebung, eine Lage oder Geometrie eines Objektes in der Umgebung (z. B. nah, fern, Gitter) vorgegeben werden und zur Klassifizierung genutzt werden. Je mehr Eigenschaftsdimensionen und/oder Klassifizierungsparameter für eine Eigenschaftsdimension zur Verfügung stehen und bestimmt werden, desto feiner kann eine Bestimmung von Objekt- und/oder Umgebungseigenschaften, d. h. eine Klassenzuordnung derselben im Klassensystem, erfolgen. Eine jede der Klasse zugeordnete Messumgebung wird insbesondere durch bestimmte einer Klasse zugeordnete Parameter für eine Eigenschaft der Sendeeinheit, Empfangseinheit und/oder Auswerteeinheit charakterisiert. Beispielhaft wird auf ein für das Klassensystem maßgebliches Feld, wie es im Rahmen der Beschreibung einer bevorzugten Ausführungsform der Fig. 1 und Fig. 2 erläutert ist, hingewiesen.

Somit erlaubt die Detektionsvorrichtung eine verbesserte Detektion, insbesondere eine verbesserte Lokalisierung und eine verbesserte Bestimmung einer Geometrie des detektierten Objektes; dies beispielsweise in einem Untergrund wie Beton, Ziegel, Holz oder Gips. Die ausgewählte Spulenkonfiguration ist demnach an die Eigenschaften der Umgebung und/oder an die Eigenschaften des zu detektierenden leitfähigen Objektes angepasst und arbeitet somit bei erhöhter Genauigkeit danach sehr zeiteffektiv.

Im Rahmen einer besonders bevorzugten Weiterbildung ist vorgesehen, dass die Klassen eine oder mehrere der Klassen aufweisen, aus der Gruppe umfassend:

- eine erste für Gitter vorgesehene Klasse;
- eine zweite für dichte Objekte, insbesondere mit geringer Überdeckung, vorgesehene Klasse;
- eine dritte für tiefe Objekte vorgesehene Klasse;
- eine vierte für magnetische Untergründe vorgesehene Klasse;
- eine fünfte für eine bestimmte Bewegungsrichtung vorgesehene Klasse;
- eine sechste für nicht-magnetische, leitfähige Objekte vorgesehene Klasse.

Erkennt die Klassifizierungseinheit beispielsweise anhand des Vorantwortsignals, dass das zu detektierende Objekt in relativ geringer Überdeckung liegt, so hat der Messzeitraum eine vergleichsweise lange Dauer, wie z. B. eine Dauer im Millisekundenbereich.

Erkennt die Klassifizierungseinheit anhand des Vorantwortsignals in einem anderen Beispiel, dass das zu detektierende Objekt vergleichsweise tief im Untergrund liegt, so veranlasst es ein Aussenden des weiteren Erregersignals mit vergleichsweise hoher Amplitude, wie 80 dB, und ein Erfassen des Hauptantwortsignals bei einer vergleichsweise hohen Abtastrate, wie 1/200 µs = 5 kHz, im Vergleich zu einer sonst vielleicht üblichen Abtastrate von 1 kHz. Dadurch kann der Rauschanteil im Hauptantwortsignal reduziert werden, da die Empfangseinheit einerseits Magnetfelder von Wirbelströmen, die noch vom weiteren Erregersignal induziert worden sind, nicht erfasst und andererseits, dass sie in einem vorgegebenem Messzeitraum häufiger mitteln kann.

Besonders bevorzugt umfassen die Sendeeigenschaften der Sendeeinheit Schaltung einer bevorzugten zeitlichen Abfolge (Sequenz) und/oder die Schaltung einer bevorzugten räumlichen Anordnung (Konfiguration) der in der Sendeeinheit aktivierten Sender. Bevorzugt umfassen zusätzlich oder alternativ die Empfangseigenschaften der Empfangseinheit die Sequenz und/oder Konfiguration der in der Empfangseinheit aktivierten Empfänger. Sender und Empfänger können bevorzugt mit dem gleichen Bauteil, z. B. dergleichen Spule, gebildet sein und zum Senden und Empfangen jeweils unterschiedlich geschaltet sein. Im Rahmen einer besonders bevorzugten Weiterbildung ist jeweils ein Sender und ein Empfänger als eine oder mehrere Spulen in einem Spulenkomplex integriert, wobei der Spulenkomplex mittels der Steuer- und Auswerteeinheit zwischen einem Sendemodus, in dem eine Spule des Spulenkomplexes ein Sendesignal aussendet, und einem Empfangsmodus, in dem eine Spule des Spulenkomplexes ein Empfangssignal empfängt, schaltbar ist. Dadurch ergibt sich auch ein beträchtliches Einsparpotenzial an Bauraum, Material und Verschaltungsaufwand. Die Anzahl der Spulen liegt beispielsweise zwischen 2 und 50, bevorzugt bei etwa 10 bis 20, wie 14 oder 16 Spulen oder durchaus auch anderen Anzahlen.

Im Rahmen einer besonders bevorzugten konstruktiven Weiterbildung unterscheiden sich die Sendespulen der Sendeeinheit jeweils in ihrer Position innerhalb der Sendeeinheit, in ihrer Größe, in ihrem Durchmesser und/oder in ihrer Stromtragfähigkeit voneinander. Dies hat den Vorteil, dass die Steuer- und Auswerteeinheit eine oder mehrere bestimmte Sendespulen zum Aussenden des adaptierten Erregersignals auswählen kann, die sich auf Grund ihrer Position/ihren Positionen innerhalb der Sendeeinheit, in ihrer Größe/ihren Größen, in ihrem Durchmesser/ihren Durchmessern und/oder in ihrer Stromtragfähigkeit/ihren Stromtragfähigkeiten zum Detektieren eines aktuell vorliegenden bestimmten Objektes in einer aktuell vorliegenden bestimmten Umgebung besonders gut eignen. Insgesamt zeigt die Detektionsvorrichtung gemäß der vorgenannten Weiterbildung eine gegenüber vorbekannten Detektionsvorrichtungen erhöhte Separationsfähigkeit, also eine Fähigkeit, Objekte in der Umgebung mit höherer Auflösung zu detektieren. Beispielsweise wählt die Klassifizierungseinheit zum Detektieren eines vergleichsweise großen Objektes eine Sendespule aus, die einen vergleichsweise großen Durchmesser aufweist und zum Detektieren eines vergleichsweise kleinen Objektes eine Sendespule mit einem vergleichsweise kleinen Durchmesser.

Handelt es sich beispielsweise gemäß dem Vorantwortsignal bei dem Objekt um eine Vielzahl dicht beieinanderliegender Objekte, die nur vergleichsweise mit wenig Untergrund überdeckt sind, wählt die Steuer- und Auswerteeinheit eine solche Sendespule/solche Sendespulen aus, die eine vergleichsweise schmale und längliche Spulensymmetrie oder eine differentielle Spulensymmetrie aufweist/aufweisen. Ergibt die Analyse des Vorantwortsignals beispielsweise, dass es sich bei der Umgebung um einen stark magnetisch leitfähigen Untergrund handelt, wählt die Steuer- und Auswerteeinheit eine differentielle Spulenkonfiguration aus, welche den Effekt des permeablen Untergrunds bereits in erster Ordnung kompensieren kann.

Ergibt die Analyse des Vorantwortsignals in einem anderen Beispiel, dass es sich bei dem zu detektierenden Objekt um ein verschweißtes Gitter handelt, so wählt die Steuer- und Auswerteeinheit eine solche Spulenkonfiguration aus, welche einen verschwindenden Fluss im Untergrund induziert. Dadurch wird vermieden, dass Wirbelströme in Maschen des verschweissten Gitters induziert werden, was ansonsten eine Verfälschung des Hauptantwortsignals zu Folge haben könnte. Die Detektionsvorrichtung ist also insbesondere bevorzugt ausgebildet, bei einem verschweißten Gitter im Untergrund den Ort der Gitterstreben zu detektieren und nicht etwa die Mitte einer Masche im Gitter.

Im Ergebnis gibt die Klassifizierungseinheit in dieser Weiterbildung der Detektionsvorrichtung wenigstens eine solche Sendespule oder räumliche Anordnung von Sendespulen (Konfiguration) der Sendereinheit vor, dessen Typ für die aktuelle Messanforderung am besten geeignet ist. Besonders bevorzugt ist die Klassifizierungseinheit zusätzlich ausgebildet, eine zeitliche Abfolge (Sequenz) festzulegen, in der die ausgewählten Spulen hintereinander zum Aussenden des weiteren Erregersignals zu bestromen sind.

Insbesondere im Rahmen der Anpassung der Sendeeinheit der Detektionsvorrichtung ist in einer Weiterbildung die Klassifizierungseinheit ausgebildet, in Abhängigkeit des Vorantwortsignals einen Wert einer magnetischen Permeabilität eine Bestromungsdauer festzulegen, innerhalb der die wenigstens eine ausgewählte Sendespule zum Aussenden des weiteren Erregersignals mit Strom zu beaufschlagen ist. Dadurch kann die Detektionsvorrichtung Effekte einer magnetischen Viskosität, welche ein etwa konstantes Untergrundstörsignal bewirken würde, weitestgehend unterdrücken oder kompensieren.

Insbesondere zur weiteren senderseitigen Anpassung der Detektionsvorrichtung an aktuelle Objekt- und/oder Umgebungseigenschaften ist die Klassifizierungseinheit ausgebildet, in Abhängigkeit des Vorantwortsignals einen Maximalstrom festzulegen, mit dem die wenigstens eine ausgewählte Sendespule (allgemein Sender) zum Aussenden des weiteren Erregersignals (allgemein Sendesignal) zu Beginn des Aussendens zu beaufschlagen ist. Dies kann beispielsweise dadurch erreicht werden, dass der Betrag einer Ladespannung eines einer jeweiligen Sendespule vorgeschalteten Kondensators festgelegt wird.

Gemäß einer Weiterbildung ist die Klassifizierungseinheit ausgebildet, die Sendeeinheit und/oder die Empfangseinheit gemäß einer Anzahl verschiedener Varianten von Messverfahren zu betreiben. Dabei ist die Klassifizierungseinheit ausgebildet, in Abhängigkeit des Vorantwortsignals zu bestimmen, welches der Anzahl verschiedener Messverfahren der Regler zum Betreiben des Senders und/oder der Empfangseinheit wählt. Gemäß der Weiterbildung wurde erkannt, dass zum Verbessern der Detektionseigenschaften der Detektionsvorrichtung nicht nur eine Hardwareeinstellung (wie die Spulensequenz und/oder - konfiguration) auf die aktuelle Objekt- und/oder Umgebungseigenschaft und die damit verbundenen Messerfordernisse zur Generierung eines brauchbaren Signals angepasst werden kann. Vielmehr kann auch ein dem Detektionsverfahren zugrundeliegendes Messverfahren zur Gewinnung eines brauchbaren bzw. verbesserten Hauptantwortsignals angepasst werden.

Varianten von im Rahmen des Detektionsverfahrens angewendeten Messverfahren unterscheiden sich beispielsweise in der Form des Stromes, mit dem die wenigstens eine ausgewählte Sendespule (allgemein Sender) beaufschlagt wird. Alternativ oder zusätzlich können sich die verschiedenen Messverfahren in der Art und Weise des Erfassens des Antwortsignals unterscheiden. Beispielsweise kann die Klassifizierungseinheit ausgebildet sein, aus dem Vorantwortsignal zu erkennen, dass es sich bei dem zu detektierenden Objekt in etwa um einen Eisenträger in einer Betonwand handelt (Klasse für dichte Objekte, insbesondere mit geringer Überdeckung). Es kann zudem das Aussenden des adaptierten Sendesignals gemäß einem besonders geeigneten Messverfahren erfolgen, um so ein Hauptantwortsignal zur verbesserten Detektion des Eisenträgers zu gewinnen. Erkennt die Klassifizierungseinheit in einer anderen Messumgebung hingegen, dass es sich bei dem zu detektierenden Objekt um ein maschenartiges Geflecht in einem hoch-permeablen Untergrund handelt (Klasse für Gitter), so bestimmt die Klassifizierungseinheit, dass die Sendeeinheit zum Aussenden eines Sendesignals gemäß einem zweiten Messverfahren verfährt.

Insbesondere kann die Steuer- und Auswerteeinheit ausgebildet sein, eine elektromagnetische Impulsfolge in bestimmter Weise zeitlich aufeinander zu veranlassen. Aufgrund der aktuellen Objekt- und/oder Umgebungseigenschaften kann beispielsweise aufgrund von vorgegebenen Detektionseigenschaften eine Messumgebung vorgegeben werden, die zur Detektion bzw. zur verbesserten Detektion, zunächst einen ersten Impuls (insbesondere mit einer ersten ausgewählten Sendespule ausgesendet) und sodann einen zweiten Impuls (insbesondere über eine zweite ausgewählte Sendespule ausgesendet) vorsieht. Demnach kann ein Hauptantwortsignal zwei Signalanteile umfassen, von denen der erste Signalanteil durch den ersten Impuls hervorgerufen worden ist und der zweite Signalanteil durch den zweiten Impuls hervorgerufen worden ist. Die Empfangseinheit ist dann bevorzugt ausgebildet, das Detektieren des Objektes durch Analyse dieser beiden Signalanteile vorzunehmen.

Zum Erfassen des Vorantwortsignals und des Hauptantwortsignals weist die Empfangseinheit der Detektionsvorrichtung in einer Weiterbildung wenigstens eine Empfangsspule auf und ist ausgebildet, einen elektrischen Strom in der wenigstens einen Empfangsspule durch eine Vielzahl Abtastvorgänge bei einer Abtastrate zu messen. Zum verbesserten Anpassen der Detektionsvorrichtung auf die aktuelle Messumgebung ist es vorteilhaft, wenn die Steuer- und Auswerteeinheit diese Abtastrate für das Erfassen des Hauptantwortsignals in Abhängigkeit des Vorantwortsignals festlegt. Die Detektionsvorrichtung kann auf die aktuelle Messumgebung durch Auswahl eines oder mehrerer bestimmter Sendespulen zum Aussenden des adaptierten Erregersignals angepasst werden. Optional kann das im Rahmen des Detektionsverfahren anzuwendende konkrete Messverfahren bestimmt werden. Es ist zusätzlich vorteilhaft, die Abtastrate der Empfangseinheit an die Umgebung und/oder das zu detektierende Objekt anzupassen. Wird das Antwortsignal beispielsweise durch eine externe Signalquelle gestört, so passt vorteilhaft eine Regeleinheit die Abtastrate der Empfangseinheit an, bis ein SNR-Wert des Hauptantwortsignals einen bestimmten SNR-Schwellenwert überschreitet.

Dadurch, dass in Abhängigkeit des Vorantwortsignals ein Messzeitraum festgelegt wird, wird bevorzugt auch eine Pulsrepetitionsfrequenz festgelegt. Dabei sendet die Detektionsvorrichtung jeweils nach einem Abfallen eines Stromes in der Empfangsspule innerhalb des festgelegten Messzeitraums unterhalb eines vorbestimmten Strom-Schwellenwertes ein weiteres Erregersignal aus; dies solange bis das Hauptantwortsignal einen SNR-Wert aufweist, der über einem SNR-Schwellenwert liegt. Die Detektionsvorrichtung ist bevorzugt ausgebildet, das Aussenden eines Erregersignals zu wiederholen, bis der SNR-Wert des Hauptantwortsignals einen vorbestimmten SNR-Schwellenwert überschreitet. Erst nach Überschreiten des vorbestimmten SNR-Schwellenwerts zieht die Empfangseinheit der Detektionsvorrichtung das Hauptantwortsignal heran, um das Objekt in der Umgebung zu detektieren. Auf diese Weise ist vor allem die Gefahr von Fehlalarmen reduziert.

Im Rahmen einer besonders bevorzugten Weiterbildung ist ein Regler der Detektionsvorrichtung ausgebildet, einen SNR-Wert des Vorantwortsignals zu bestimmen und die Auswahl der wenigstens einen Sendespule und/oder das Bestimmen des Messverfahrens und/oder das Festlegen der Abtastrate, der Verstärkung, der Bestromungsdauer, des Messzeitraumes und/oder des Maximalstromes derart vorzunehmen, dass der SNR-Wert des Hauptantwortsignals größer ist als der SNR-Wert des Vorantwortsignals. Die Messumgebung der Detektionsvorrichtung ist demnach in einer verbessernden Weise an die aktuelle Objekt- und/oder Umgebungseigenschaft angepasst.

Durch eine vorgenannte bevorzugte automatische Anpassung der Detektionsvorrichtung werden Hauptantwortsignale erzielt, die einen hohen SNR-Wert aufweisen.

Die Empfangseinheit ist bevorzugt dazu ausgebildet, eine mono-statische und/oder eine bistatische Messung eines Stromes in der/den Empfangsspule/Empfangsspulen vorzunehmen.

Insbesondere für den Fall, dass die Detektionsvorrichtung auf einem PI-Messprinzip basiert, umfasst die Empfangseinheit zum Erfassen des Vorantwortsignals und des Hauptantwortsignals wenigstens einen steuerbaren Messverstärker zum Verstärken eines Messsignals. Das Messsignal kann beispielsweise ein Empfangsstrom in der Empfangsspule der Empfangseinheit sein. Zur weiteren Anpassung der Detektionsvorrichtung an die aktuelle Messumgebung ist es bevorzugt, dass die Regeleinheit die Verstärkung des steuerbaren Messverstärkers für das Erfassen des Hauptantwortsignals festlegt.

Bevorzugt umfasst das Verfahren beim zusätzlichen Schritt eines Klassifizierens aufgrund eines Vorantwortsignals auch die Vorgabe eines Messzeitraumes. Bevorzugt ist die Klassifizierungseinheit ausgebildet, in Abhängigkeit des Vorantwortsignals für die Steuer- und Auswerteeinheit einen Messzeitraum festzulegen, innerhalb der die Empfangseinheit das Hauptantwortsignal zu erfassen hat. Die Detektionsvorrichtung kann in einer Weiterbildung beispielsweise ausgebildet sein, in einem Vormessbetrieb Steuervariablen zum Steuern eines Gates der Empfangseinheit in Abhängigkeit des Vorantwortsignals zu bestimmen und sodann das Gate während des Hauptmessbetriebs zum Erfassen des Hauptantwortsignals in Abhängigkeit der bestimmten Steuervariablen zu steuern. Diese Weiterbildung ist insbesondere dann bevorzugt, wenn die Detektionsvorrichtung auf einem PI-Messprinzip basiert.

Beispielsweise wird gemäß einer bevorzugten Weiterbildung des Detektionsverfahrens in einem Vormessbetrieb das Vorantwortsignal und in einem Hauptmessbetrieb das Hauptantwortsignal erfasst, mittels dem das Objekt in der Umgebung genauer detektiert wird. Darüberhinaus hat es sich als vorteilhaft erwiesen, dass eine Regeleinheit zum automatischen (nicht-manuellen) Regeln wenigstens des Hauptantwortsignals als Regelgrösse ausgebildet ist. Entsprechend kann die Regeleinheit mit der Klassifizierungseinheit sowie der Steuer- und Auswerteeinheit und/oder der Sendeeinheit und/oder der Empfangseinheit unter Bildung eines Regelkreises regelverbunden sein. Insbesondere kann die Regeleinheit zum automatischen (nicht-manuellen) Regeln wenigstens einer Amplitude und/oder SNR-Wertes des Antwortsignals als Regelgrösse ausgebildet sein.

So hat es sich als besonders bevorzugt erwiesen, jeder Klasse des Klassensystems voreingestellte Regeleigenschaften für die Regeleinheit zuzuordnen. Insbesondere können die Regeleigenschaften als Stellgrösse einen oder mehrere Regelparameter umfassen, aus der Gruppe bestehend aus:

- Pulsrepetitionsfrequenz, Pulsamplitude und/oder Eingangsverstärkung, Pulspolarität, Bestromungsdauer;
- Mittelungszeiten, Integrationszeiten, insbesondere Messdauer, und/oder Abtastintervall, Filterkoeffizienten;
- Filtereigenschaften, Verstärkereigenschaften, Gate-Startzeitpunkt und Gate-Zeitdauer, Mittelungszeit bzw. Anzahl der Mittelungszyklen.

Als Regelgrösse dient bevorzugt ein Empfangssignal und/oder Antwortsignal selbst. Als Führungsgrösse können bevorzugt eine Amplitude und/oder ein SNR-Wert des Empfangssignals und/oder Antwortsignals dienen.

Darüberhinaus hat es sich als vorteilhaft erwiesen, ein Nutzerinterface und/oder eine Regeleinheit auszubilden, die Klassifizierungseinheit zur erneuten und/oder mittelnden Klassifizierung von Objekt- und/oder Umgebungseigenschaften mehrfach zu triggern. Ein Nutzerinterface, das zur Interaktion zwischen der Detektionsvorrichtung und einem Nutzer dient, wird auch als MMI (MMI = Man-Machine-Interface) bezeichnet und ist z. B. als Beeper, Bildschirm od. dgl. ausgebildet. Es kann von Vorteil sein, wenn dem Nutzer durch ein MMI signalisiert wird, dass eine Regeleinheit die Regelgröße nicht in gewünschter Weise an die Führungsgrösse anpasst. Dazu kann beispielsweise ein TimeOut-Zeitfenster oder eine sonstige Abbruchbedingung vorgesehen sein, die bei Vorliegen eine erneute und/oder mittelnde Klassifizierung von Objekt- und/oder Umgebungseigenschaften mehrfach triggert.

Insbesondere dazu kann das ausgewertete weitere Antwortsignal bzw. ein Vorantwortsignal und/oder die eingestellten Sende-, Empfangs-, Auswerte- und/oder Regeleigenschaften gespeichert werden. So kann bei Vorliegen einer Abbruchbedingung der Regelschritt beendet und eine jeweilige gespeicherte, ursprüngliche oder sonstige ggfs. individuell festgelegte Startgruppe von Sende-, Empfangs- und Auswerteeigenschaften eingestellt werden.

Zur weiteren Anpassung der Detektionsvorrichtung auf die aktuellen Objekt- und/oder Umgebungseigenschaften weist die Detektionsvorrichtung in einer besonders bevorzugten Weiterbildung zusätzlich einen Lagesensor auf, der ausgebildet ist, in Abhängigkeit der Lage der Detektionsvorrichtung relativ zur Umgebung ein Lagesignal zu erzeugen. Das Lagesignal kann beispielsweise angeben, dass eine der Anzahl Sendespulen ausgerichtet ist oder nicht ausgerichtet ist oder die relative Geschwindigkeit zwischen der Detektionsvorrichtung und der Umgebung oder einen Abstand zwischen der Detektionsvorrichtung und einem Untergrund in der Umgebung. Die Regeleinheit ist bevorzugt ausgebildet, die Auswahl der wenigstens einen Sendespule und/oder das Bestimmen des Messverfahrens und/oder das Festlegen der Abtastrate, der Verstärkung, der Bestromungsdauer, des Messzeitraums und/oder des Maximalstroms zusätzlich in Abhängigkeit des Lagesignals vorzunehmen.

Gemäß der Weiterbildung ist die Detektionsvorrichtung insbesondere nicht nur auf die aktuellen Objekt- und/oder Umgebungseigenschaften angepasst, sondern beispielsweise auch auf eine Relativgeschwindigkeit zwischen der Detektionsvorrichtung und der Umgebung oder auf eine aktuelle Ausrichtung der Detektionsvorrichtung in Bezug auf die Umgebung. Dadurch ist die Genauigkeit der Detektionsvorrichtung abermals erhöht.

**Ausführungsbeispiele**

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

Fig. 1 ein Blockschaltbild einer Detektionsvorrichtung gemäss einer bevorzugten Ausführungsform;

Fig. 2 ein Flussdiagramm zur Verdeutlichung eines Klassifizierungsverfahrens mittels eines Vorantwortsignals und unter Darstellung eines beispielhaften Klassensystems;

Fig. 3 ein Flussdiagramm zur schematischen Darstellung einer bevorzugten Ausführungsform eines Detektionsverfahrens;

Fig. 4 eine schematische Draufsicht und Querschnittsansicht einer bevorzugten kombinierten Sende- und Empfangseinheit in Form eines Spulenkomplexes;

Fig. 5 zwei Graphen zur schematischen Darstellung eines Sendestromverlaufs und eines Spannungsverlaufs in einer Sendespule;

Fig. 6 ein Flussdiagramm zur schematischen Darstellung einer Regelschleife zum Zwecke einer Einstellung eines SNR-Wertes SNR(k) für ein Antwortsignal oberhalb einer SNR-Schwelle $SNR_{soll}$ im Rahmen eines Vormessbetriebes, z. B. unter Bestromung einer Sendespule;

Fig. 7 ein Blockschaltbild mit einer Regel- und Klassifizierungseinheit für eine erste bevorzugte Spulenkonfiguration bei einem Spulenkomplex der Fig. 4 für zwei beispielhaft ausgewählte Klassen eines Klassensystems der Klassifizierungseinheit zur Einstellung eines Tiefenmodus einerseits und eines hochauflösenden Modus andererseits;

Fig. 8 ein Blockschaltbild mit einer Regel- und Klassifizierungseinheit für eine zweite bevorzugte Spulenkonfiguration bei einem Spulenkomplex der Fig. 4 für zwei beispielhaft ausgewählte Klassen eines Klassensystems der Klassifizierungseinheit zur Einstellung eines Tiefenmodus einerseits und eines gitterauflösenden Modus andererseits.

Fig. 1 zeigt ein Blockschaltbild einer bevorzugten Ausführungsform einer Detektionsvorrichtung 100. Die Detektionsvorrichtung 100 dient hier zum Detektieren eines elektrisch und/oder magnetisch leitfähigen Objektes 200 in einer Umgebung 300 in der Nähe eines Sensorkopfes 101 der Detektionsvorrichtung 100. Die Umgebung 300, beispielsweise ein Untergrund, kann etwa aus Beton, Ziegeln, Holz oder Gips - also typischen Materialien, wie sie bei Bauwerken bzw. werdenden Bauwerken vorfindbar sind - bestehen. Der Abstand zwischen dem Sensorkopf 101 der Detektionsvorrichtung 100 und der Umgebung 300 ist typischerweise nicht sehr groß und liegt zwischen einigen Millimetern und einigen Metern; vorliegend nicht mehr als einige Zentimeter.

Die Detektionsvorrichtung 100 umfasst neben dem Sensorkopf 101 ein hier nicht gezeigtes Gehäuse mit einem Griff oder dergleichen Handhabungsmittel, mit dem die Detektionsvorrichtung 100 über den Untergrund geführt werden kann. Hier sind im Sensorkopf 101 wenigstens eine Sendeeinheit 110 und eine Empfangseinheit 130 untergebracht. Vorliegend umfasst der Sensorkopf 101 auch eine Steuer- und Auswerteeinheit 160, die ebenso wie die Sendeeinheit 110 und die Empfangseinheit 130 von einer Regeleinheit 170 geregelt wird. Ausserdem sorgt ein Nutzerinterface 153, vorliegend ein MMI, für eine angemessene Signalisierung hinsichtlich eines Betriebszustandes und/oder eines Detektionsergebnisses an einen Nutzer. Die Detektionsvorrichtung 100 ist vorliegend also für den manuellen Betrieb ausgestaltet und umfasst dazu übliche Komponenten wie einen Handgriff, einen oder mehrere Bedienknöpfe, Signalausgabemittel wie ein Anzeigefeld oder akustische Signalausgabemittel und dergleichen weitere, die allesamt in Fig. 1 mittels dem Nutzerinterface 153 realisiert sein können.

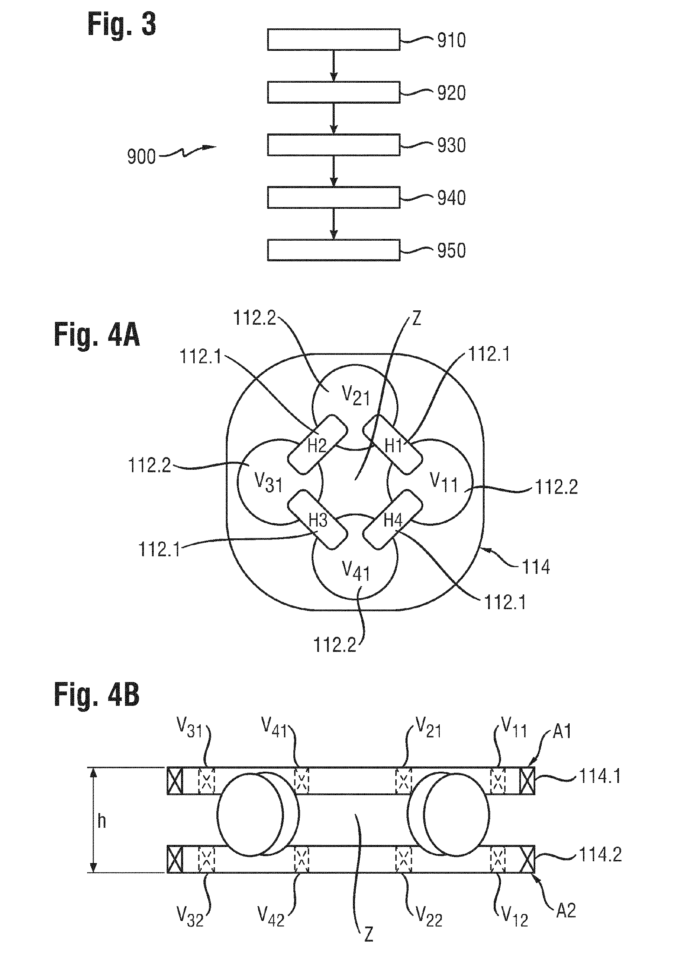

Die Sendeeinheit 110 weist mehrere Sender 112 auf, die zum Aussenden eines elektromagnetischen Sendesignals 120 in die Umgebung 300 ausgebildet sind. Die Empfangseinheit 130 weist mehrere Empfänger 132 auf, die zum Empfangen eines von dem Sendesignal 120 und den Eigenschaften des Objektes 200 und der Umgebung 300 abhängigen Empfangssignals 122 ausgebildet sind. Zum Erfassen eines vom ausgesendeten Sendesignal 120 und von der Beschaffenheit der Umgebung 300 abhängigen Empfangssignals 122 ist die Empfangseinheit 130 ausgebildet. Vorliegend sind die Sender 112 als Sendespulen und die Empfänger 132 als Empfangsspulen ausgebildet. Dabei können die Sende- und Empfangsspulen 112, 132 als Teil eines anhand von Fig. 4 erläuterten Spulenkomplexes 114 gebildet sein. Die Spulen des Spulenkomplexes 114 werden dazu wahlweise als Empfangsspulen 132 der Empfangseinheit 130 oder Sendespulen 112 der Sendeeinheit 110 geschaltet bzw. bestromt und ausgelesen. Das Empfangssignal 122 wird je nach Empfangseigenschaften für die Empfangseinheit 130 in ein geeignetes Antwortsignal 131 gewandelt, das Aufschluss über Objekt- und/oder Umgebungseigenschaften des Objekts 200 bzw. der Umgebung 300 des Objekts 200 gibt. Die Steuer- und Auswerteeinheit 160 ist in der Lage, dieses Antwortsignal 131 auszuwerten und eine Information über das Objekt 200 dem Nutzerinterface 153 (MMI) zur Verfügung zu stellen.

Die Empfänger 132 der Empfangseinheit 130 und Sender 112 der Sendeeinheit 110 werden über Steuersignale 140.1 und 140.2 in geeigneter Weise angesteuert, um ein aussagekräftiges Antwortsignal 131 in dem Sensorkopf 101 zur Verfügung zu stellen.

Das ausgesendete elektromagnetische Sendesignal 120 wechselwirkt, wie dargestellt, mit der Umgebung 300 und dem elektrisch und/oder magnetisch leitfähigen Objekt 200. Beispielsweise erzeugt das elektrisch und/oder magnetisch leitfähige Objekt 200 gemäß dem weiter oben bereits erläuterten Pulsinduktionsmessprinzip auf den Empfang des ausgesendeten elektromagnetischen Sendesignals 120 hin ein sekundäres Magnetfeld, das die Empfangseinheit 130 mit Hilfe von wenigstens einer Empfangsspule der Empfangseinheit 130 als Empfangssignal 122 registriert. Dabei kann die Empfangsspule 132 also körperlich dieselbe Spule sein, wie eine der Sendespulen 112, jedoch ggfs. mit anderer Bestromung und/oder Auslesung 111 gemäß der Vorgabe der Steuer- und Auswerteeinheit 160.

Weiter umfasst die Detektionsvorrichtung 100 eine Klassifizierungseinheit 180, die zum Steuern der Sendeeinheit 110, der Empfangseinheit 130 und der Steuer- und Auswerteeinheit 160 ausgebildet ist. Die Klassifizierungseinheit 180 kann beispielsweise zusammen mit der Steuer- und Auswerteeinheit 160 und der Regeleinheit 170 eine nicht näher bezeichnete Steuerung, vorliegend auch mit Regelfunktion, für die Sendeeinheit 110 und Empfangseinheit 130 bilden. Die Steuerung ist hier in Form eines integrierten Schaltkreises ausgestaltet, der zusammen mit der Sendeeinheit 110 und der Empfangseinheit 130 im Sensorkopf 101 untergebracht ist.

Die Klassifizierungseinheit 180 umfasst vorliegend eine Logik 181, vorliegend in Form einer Support-Vektor-Maschine (SVM), die ein in Fig. 2 beispielhaft im Rahmen eines Klassifizierungsverfahrens 800 dargestelltes Klassensystem 850 nutzt. Das Klassensystem 850 stellt eine in Fig.1 symbolisch dargestellte und in Fig. 2 näher erläuterte Anzahl von Klassen K1... Kn zur Verfügung, in die mittels der Logik 181 und in Abhängigkeit des Antwortsignals 131 aktuelle Objekt- und/oder Umgebungseigenschaften des Objektes 200 adaptiv klassifiziert werden können, d.h. aktuell vorliegende Eigenschaften werden einer der Klassen K1... Kn zugeordnet. Die Klassen K1... Kn des Klassensystems 850 unterscheiden sich in mindestens einer Objekt- und/oder Umgebungseigenschaft voneinander und sind anhand von Fig. 2 beispielhaft erläutert.

Die Klassifizierungseinheit 180 nutzt vorliegend ein Klassensystem 850, das zur Darstellung der Klassen K1... Kn mittels einer Eigenschaftsdimension A... E (Dimension) und eines Klassifikationsparameters 1, 2, 3...x, y (Kategorie) für die Eigenschaftsdimension eine Matrix von Klassen K1... Kn aufspannt. Für die Eigenschaftsdimensionen A, B sind beispielsweise Untergrundeigenschaften in den Kategorien festgelegt. Für die Eigenschaftsdimensionen C, D, E sind beispielsweise Objekteigenschaften in den Kategorien festgelegt. Beispielhaft für ein aus Eigenschaftsdimension und Kategorie gebildetes zweidimensionales Feld ist die mit Inhalten gefüllte Matrix von Klassen in Tab. 1 wiedergegeben.

Tab. 1:

| Dimension | Kategorie 1 | Kategorie n | Mögliche Messgrössen (Feature Vektoren) |
|---|---|---|---|
| A. Geometrie | Nah | Fern | Amplitude |
| B. Untergrund | Luft | Ziegel | Amplitude/Krummung |
| C. Objekt-Material | Ferromagnetisch | Nicht-ferromagnetisch | Amplitude/Krummung |
| D. Objekt-Geometrie | Gitter verschweisst | Gitter nicht verschweisst | Differenziell/Einzelspule |
| E. Objekt-Dichte | Dicht | Separiert | Kleine Spulen/Grosse Spulen |

Eine Angabe der Klasse erfolgt hier über einen Schlüssel $A_I B_J C_k D_l E_m$ mit i, j, k, l, m = 1... n für die Kategorie und A, B, C ... für die Dimension. So kann - beispielhaft gemäss Fig. 2 - eine Reihe von Klassen K1... Kn angegeben werden.

Eine jede der Klasse K1... Kn zugeordnete und für den Sensorkopf 101 vorgebbare Messumgebung wird durch bestimmte Detektionseigenschaften festgelegt. Die Detektionseigenschaften werden durch der Klasse K1... Kn zugeordnete Parameter P festgelegt. Die Parameter P können eine Sendeeigenschaft der Sendeeinheit 110, eine Empfangseigenschaft der Empfangseinheit 130 und eine Auswerteeigenschaft der Steuer- und Auswerteeinheit 160 charakterisieren. Die Klassifizierungseinheit 180 ist mit der Sendeeinheit 110, der Empfangseinheit 130 und der Steuer- und Auswerteeinheit 160 steuerverbunden, so dass die einer Klasse K1... Kn zugeordneten Parameter für eine Eigenschaft an die genannten Einheiten 110, 130, 160 mittels der Steuersignale 140.1 und 140.2 übertragen werden können. Auf diese Weise lassen sich die Sendeeinheit 110, die Empfangseinheit 130 und die Steuer- und Auswerteeinheit 160 gemäß eines für eine bestimmte Klasse K1... Kn festgelegten Parametersatzes 850.1...850.n gesteuert betreiben.

Wie aus Fig. 1 erkennbar ist, sind mittels der Steuer- und Auswerteeinheit 160 beispielsweise (zeitliche) Sequenzen und/oder (räumliche) Konfigurationen S von Spulen des Spulenkomplexes 114 ansteuerbar. Auch lassen sich wenigstens drei Parameter P als Senderparameter für eine Sendespule ansteuern, nämlich vorliegend eine Pulsrepetitionsfrequenz PRF, Pulsamplitude, Pulspolarität und Bestromungsdauer. Auch lassen sich wenigstens drei Parameter W als Auswerteparameter für die Steuer- und Auswerteeinheit 160 ansteuern, nämlich vorliegend Mittelungszeiten, Integrationszeiten und Filterkoeffizienten. Nicht dargestellt ist die Möglichkeit, die Empfangseigenschaften der Empfangseinheit 130 mittels eines Empfängerparameters, mit denen jeder der Empfänger 132 betreibbar ist, anzusteuern; nämlich hier in Form der Filtereigenschaften, Verstärkereigenschaften, Gate-Startzeitpunkt und Gate-Zeitdauer, Mittelungszeit bzw. Anzahl der Mittelungszyklen.

Entsprechend ist jeder Sender 112 in Form von Sendespulen unabhängig von den übrigen Sendern mit einem elektrischen Strom beaufschlagbar. Die Sendeeinheit 110 weist dafür eine mittels der Bestromung und/oder Auslesung 111 dargestellte Stromstelleinrichtung auf, die in Abhängigkeit eines von der Klassifizierungseinheit 180 bereitgestellten Regelsignals 140.1 eine oder mehrere der Sendespulen mit einem elektrischen Strom beaufschlagt. Die Stromform und auch die Bestromungsdauer werden jeweils von den, einer Klasse K1... Kn des Klassensystems 850 zugeordneten, Parametern P vorgegeben.

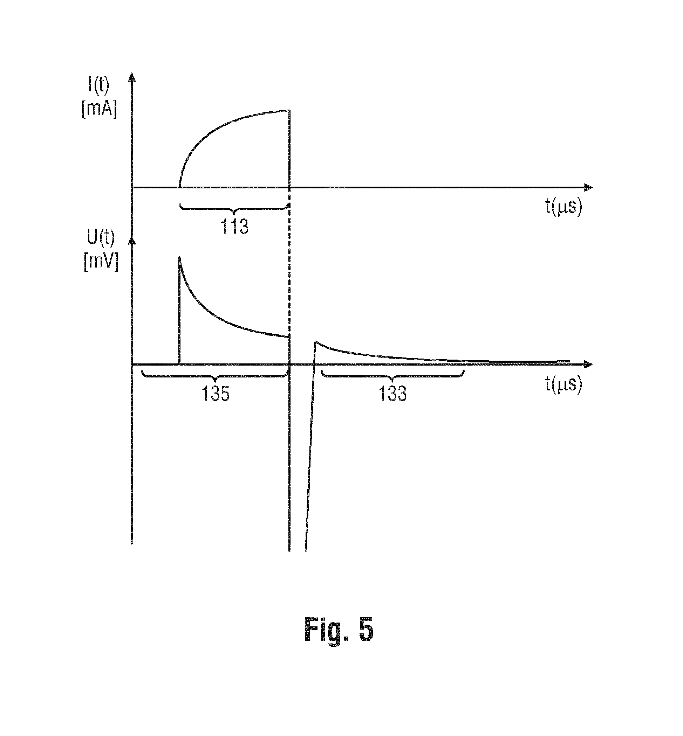

Zweckmäßiger Weise klassifiziert die Klassifizierungseinheit 180 also Objekt- und/oder Umgebungseigenschaften vor und ordnet aktuelle Eigenschaften in das Klassensystem 850 ein. Dies kann z. B. per plausibler Schätzung geschehen oder einfach anhand einer vorgegebenen Startklasse. Entsprechend ist es möglich, für den Start der Klassifizierungseinheit 180 eine Startgruppe von Sende-, Empfangs- und Auswerteeigenschaften voreinzustellen. Vorzugsweise wird aber die Klassifizierungseinheit 180 aktuelle Objekt- und/oder Umgebungseigenschaften anhand eines Antwortsignals 131 in Form eines Vorantwortsignals 131.1 in das Klassensystem 850 einordnen. Lediglich ein Beispiel eines Vorantwortsignals 131.1 kann sich beispielsweise aus dem Bestromungszustand einer Sendespule, wie er in Fig. 5 gezeigt ist, ergeben. D. h. anhand eines Antwortsignals 131 anzunehmenden Objekt- und/oder Umgebungseigenschaften werden mittels der Klassifizierungseinheit 180 in einer der Anzahl bestimmter vordefinierter Klassen K1... Kn zugeordnet. Der betreffenden Klasse Ki der Anzahl von Klassen K1... Kn - d. h. z. B. die mit dem Dimension und Kategorie festlegenden Schlüssel $A_iB_jC_kD_lE_m$ - ist dann ein Satz von Parametern Si, Pi, Wi, i=1..m, zugeordnet. Diese insgesamt als P bezeichneten Parameter P können z.B. eine Sequenz und/oder Konfiguration von Spulen, Sendeeigenschaften für die Sendeeinheit 110, Empfangseigenschaften für die Empfangseinheit 130 und Auswerteeigenschaften für die Steuer- und Auswerteeinheit 160 vorgeben gemäß dem eine Messung Mi zur Erzeugung eines Antwortsignals 131 als Hauptantwortsignal 131.2 erfolgen kann. Lediglich ein Beispiel eines Hauptantwortsignals 131.2 ergibt sich beispielsweise aus dem abklingenden Spannungszustand einer Spule, wie er in Fig. 5 gezeigt ist. Mittels dem vergleichsweise zeiteffektiv ermittelten Hauptantwortsignal 131.2 ist eine dennoch verlässliche Detektion des Objektes 200 möglich, da das Hauptantwortsignal 131.2 mittels einer an die Objekt- und/oder Umgebungseigenschaften angepassten Messumgebung in der Messung Mi gewonnen wurde. Insofern erfolgt eine strukturierte Anpassung der Detektionsvorrichtung anhand der in den Klassen K1... Kn festgelegten Messumgebungen. Aufgrund der adaptierten Detektionsvorrichtung 100 wird unnötiger Messaufwand vermieden und der verbleibende Messaufwand abhäng von Objekt- und/oder Umgebungseigenschaften effektiv genutzt.

Konkret ist die Klassifizierungseinheit 180 ausgebildet, in Abhängigkeit des Antwortsignals 131 als Vorantwortsignal 131.1, welches von der Empfangseinheit 130 erfasst worden ist und von dem zuerst ausgesendeten elektromagnetischen Sendesignal 120 abhängig ist, zu klassifizieren. Dementsprechend wird dann ausgewählt, welche wenigstens eine Sendespule 132 der Anzahl von Sendern 112 zum Aussenden eines weiteren Sendesignals 120 als Sendesignals 120 mit einem elektrischen Strom beaufschlagt wird. Vorliegend in einem Vormessbetrieb erfasst die Empfangseinheit 130 zunächst ein Empfangssignal 122 zur Bildung eines Antwortsignals 131 als Vorantwortsignal 131.1, das Aufschluss über eine wahrscheinlich vorliegende aktuelle Objekt- und/oder Umgebungseigenschaft gibt, d. h. insbesondere über die Beschaffenheit der Umgebung und/oder über die Beschaffenheit des zu detektierenden leitfähigen Objektes 200. Vor einem Hauptmessbetrieb wird mittels der Klassifizierungseinheit 180 dann in der oben erläuterten Weise automatisch z. B. eine in dem Klassensystem 850 vorbestimmte optimale Sequenz und/oder Konfiguration S von Spulen für die aktuelle Objekt- und/oder Umgebungseigenschaft angesteuert. Diese eignet sich zum Erfassen eines Hauptantwortsignals 131.2 mit einem verbesserten SNR-Wert vergleichsweise gut.

Das Aussenden des weiteren adaptierten Sendesignals 120 mittels der Sendeeinheit 110 und das Erfassen eines von diesem abhängigen verbesserten Empfangssignals 122 mittels der Empfangseinheit 130 bilden einen Hauptmessbetrieb der Detektionsvorrichtung 100. Danach ist die Regeleinheit 170 ausgebildet, z.B. unter Betreiben der optimalen Sequenz und/oder Konfiguration S von Spulen ein Aussenden des Weiteren, mittels der ausgewählten Konfiguration S adaptierten weiteren Sendesignals 120 zu veranlassen. In der Fig. 1 sind der Einfachheit halber sowohl das erste ausgesendete Sendesignal zum Erfassen des Antwortsignals 131 als Vorantwortsignals 131.1 als auch das adaptierte bzw. das weitere Sendesignal zum Erfassen des weiteren Antwortsignals 131 als Hauptantwortsignal 131.2 mit der Bezugsnummer 120 gekennzeichnet. Die Empfangseinheit 130 ist darüberhinaus ausgebildet, das elektrisch und/oder magnetisch leitfähige Objekt 200 in Abhängigkeit vom optimierten weiteren Sendesignal 120 zu detektieren, d. h. aufgrund eines dann ebenfalls verbesserten Empfangssignals 122 ein Antwortsignal 131 als Hauptantwortsignal 131.2 zur Verfügung zu stellen, mit dem sich die Objekt- und/oder Umgebungseigenschaft vergleichsweise gut bestimmen lassen.

Die Klassifizierungseinheit 180 ist vorliegend nicht nur dazu ausgebildet, eine Sequenz und/oder Konfiguration S von Spulen zum Aussenden des weiteren Sendesignals 120 zu bestimmen, die oben nur beispielhaft erläutert wurde. Vielmehr wird auch die Art und Weise des Aussendens des weiteren Sendesignals 120 und Empfangens des Empfangssignals 122 mittels der Klassifizierungseinheit 180 sowie der Steuer- und Auswerteeinheit 160 gesteuert; dies beispielsweise durch Bestimmen eines bestimmten Messverfahrens. Das Bestimmen eines bestimmten Sendeverfahrens kann auch einhergehen mit dem Festlegen einer Abtastrate, mit der die Empfangseinheit 130 einen Strom in einem Empfänger 132 in Form einer Empfangsspule erfasst, mit dem Festlegen einer Verstärkung eines Verstärkers der Empfangseinheit 130, einer Bestromungsdauer, eines Messzeitraums und/oder eines Maximalstroms. Dadurch wird eine Messumgebung der Detektionsvorrichtung 100 in optimaler Weise auf die aktuell gegebene Objekt- und/oder Umgebungseigenschaft adaptiert. Dazu notwendige Anweisungen erhält die Sendeeinheit 120 über ein von der Steuer- und Auswerteeinheit 160 bereit gestelltes erstes Regelsignal 140.1 und die Empfangseinheit 130 über ein zweites Regelsignal 140.2.

Die in Fig. 1 dargestellte Detektionsvorrichtung 100 hat weiter einen Lagesensor 150, der ausgebildet ist, in Abhängigkeit der Lage der Detektionsvorrichtung 100 relativ zur Umgebung ein Lagesignal 152 zu erzeugen, insbesondere ein zeitabhängiges Lagesignal 152, wie die Geschwindigkeit der Detektionsvorrichtung relativ zur Umgebung 300. Das Lagesignal 152 wird hier der Regeleinheit 170 zugeführt. Die Klassifizierungseinheit 180 ist ausgebildet, die Auswahl der wenigstens einen Sendespule nicht nur in Abhängigkeit des Vorantwortsignals 131.1 vorzunehmen, sondern auch in Abhängigkeit des Lagesignals 152, das ihr direkt vom Lagesensor 150 oder über die Regeleinheit 170 zuführbar ist. Beispielsweise kann eine hohe Geschwindigkeit der Detektionsvorrichtung 100 bei ansonsten gleich bleibender Messumgebung eine andere Spulenkonfiguration erfordern, als eine sehr geringe Geschwindigkeit oder ein Stillstand der Detektionsvorrichtung 100.

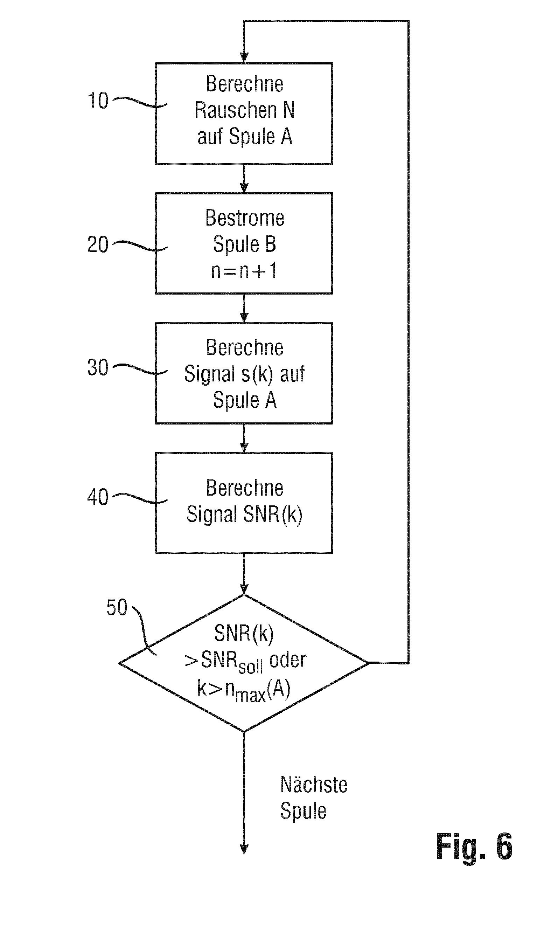

Insbesondere ist die Regeleinheit 170 vorliegend dazu ausgebildet, das weitere Antwortsignal 131 in einem Regelschritt automatisch mittels den der obengenannten Klasse Ki zugeordneten Regeleigenschaften auf einen voreingestellten Soll-Wert einer Führungsgröße zu regeln. Konkret ist die Regeleinheit 170 zum automatischen (nicht-manuellen) Regeln wenigstens des Antwortsignals 131 als Regelgröße ausgebildet. Mit der Klassifizierungseinheit 180 sowie der Steuer- und Auswerteeinheit 160, der Sendeeinheit 110 und der Empfangseinheit 130 ist die Regeleinheit 170 unter Bildung eines Regelkreises regelverbunden. Vorliegend kann wahlweise eine Amplitude A und/oder ein SNR-Wert des Antwortsignals 131 als Regelgröße automatisch (nicht-manuell) geregelt werden; ein Beispiel zur Nutzung eines SNR-Wertes des Antwortsignals 131 als Regelgröße ist anhand von Fig. 6 erläutert.

Im Übrigen sind vorliegend jeder Klasse K1... Kn des Klassensystems 850 - über die Parametersätze 850.1... 850.n - auch voreingestellte Regeleigenschaften für die Regeleinheit 170 zugeordnet. Konkret lässt sich ein Hauptantwortsignal 131.2 hinsichtlich seiner Qualität noch verbessern, indem als Stellgröße ein oder mehrere der Regelparameter genutzt werden, aus der Gruppe bestehend aus:

Pulsrepetitionsfrequenz, Pulsamplitude, Pulspolarität, Bestromungsdauer;
Mittelungszeiten, Integrationszeiten, Filterkoeffizienten;
Filtereigenschaften, Verstärkereigenschaften, Gate-Startzeitpunkt und Gate-Zeitdauer, Mittelungszeit bzw. Anzahl der Mittelungszyklen.

Die oben genannte Pulsamplitude lässt sich beispielsweise in gewissem Rahmen von einer Eingangsverstärkung beeinflussen. Die oben genannten Integrationszeiten beeinflussen in gewissem Rahmen auch die Messdauer und ein Abtastintervall.

Fig. 2 zeigt ein Flussdiagramm zur weiteren Verdeutlichung eines Klassifizierungsverfahrens 800. Die Klassifizierungseinheit 180 führt dazu ein Klassifizierungsverfahren gemäß dem dargestellten Klassifikationssystem 850 aus, mittels dem bevorzugt aufgrund des Antwortsignals 131 klassifiziert und die Detektionsvorrichtung 100 auf die aktuelle Objekt- und/oder Umgebungseigenschaft in Abhängigkeit des Klassifikationsergebnisses adaptiert wird. Auf ein Startsignal 810 hin folgt zunächst ein Nullabgleich 820, bei dem sich die Detektionsvorrichtung 100 kalibriert. Anschließend geht die Detektionsvorrichtung 100 in einen Vormessbetrieb 830 über, bei dem die Detektionsvorrichtung 100 mittels der Sendeeinheit 110 das Sendesignal 120 in die Umgebung aussendet und ein Antwortsignal 131 in Form eines Vorantwortsignals 131.1 in der oben erläuterten Weise erzeugt. Die Klassifizierungseinheit 180 nimmt sodann eine Klassifizierung 840 der Objekt- und/oder Umgebungseigenschaft anhand einer Analyse des dergestalt erzeugten Vorantwortsignals 131.1 vor. Beispielsweise bestimmt die Klassifizierungseinheit 180 aus dem Vorantwortsignal 131.1 einen Wert wenigstens eines Klassifikationsparameters 1, 2, 3...x, y (Kategorie) für jede Eigenschaftsdimension A...E (Dimension), wie z. B. für eine geometrische Eigenschaft eines Objektes, eine elektrische und/oder magnetische Leitfähigkeit eines Objektes und/oder der Umgebung, eine Lage eines Objektes in der Umgebung (vgl. Tab. 1). Demnach wird eine Objekt- und/oder Umgebungseigenschaft anhand des Antwortsignals 131 in Abhängigkeit des Wertes für eine vorgenannte Dimension und Kategorie z.B. als $A_1B_1C_1D_xE_x$ klassifiziert, d. h. eine Objekt- und/oder Umgebungseigenschaft wird in eine der Klassen K1... Kn eingeordnet. Jeder Klasse ist z. B. eine bestimmte Konfiguration und/oder Sequenz S von Spulen zugeordnet, die festlegt, welche Spulen der Sendeeinheit 110 für den Hauptmessbetrieb zum Einsatz kommen sollen. Beispielsweise ist der zweiten Klasse K2 eine Spulenkonfiguration zugeordnet, die sich besonders gut zur Detektion von Objekt- und/oder Umgebungseigenschaften gemäss dem Schlüssel $A_1B_1C_1D_xE_x$ eignen.

Außerdem beinhaltet jede Klasse K1... Kn einen bestimmten Parametersatz 850.1... 850.n von oben erläuterten Parametern P1... Pn für die Sendeeinheit 110 und/oder Empfangseinheit 130, wie vorteilhaft z. B. Pulsrepetitionsfrequenz, Bestromungsdauer, maximale Stromamplitude, Abtastrate, Verstärkung oder Messzeitraum. Entsprechend umfasst der Parametersatz auch eine Vorgabe für eine Sequenz und/oder Konfiguration von Spulen S1... Sn in den Klassen K1... Kn. Darin kann beispielsweise festgelegt sein, in welcher Reihenfolge die ausgewählten Spulen zum Aussenden des weiteren Sendesignals zu bestromen sind. Einige der vorstehend genannten Variablen können auch von einem Nutzer der Detektionsvorrichtung 100 vorgegeben werden. Entsprechend umfasst der Parametersatz auch Parameter W1... Wn für Auswerteeigenschaften für die Steuer- und Auswerteeinheit 160. Nach dem Klassifizieren, d. h. nach dem Bestimmen der Sendespulen, dem Festlegen des Parametersatzes und der Spulensequenz, erfolgt die eigentliche Messung im Hauptmessbetrieb und damit das Detektieren des Objektes 200 in der Umgebung 300. Mittels der Regeleinheit 170 lassen sich zudem die Parameter P1... Pn, S1... Sn, W1... Wn für jedes i aus 1... n als Stellgröße ändern, um ein Antwortsignal 131 als Regelgröße zu optimieren.

Es versteht sich, dass die Vorgänge im Vormessbetrieb wiederholt werden können, bis das Hauptantwortsignal 131.2 einen SNR-Wert aufweist, der einen vorgegebenen Schwellenwert überschreitet; ein Beispiel ist anhand von Fig. 6 erläutert. Auch der Klassifizierungsvorgang kann so lange wiederholt werden, bis eine Klassifikation des Vorantwortsignals 131.1 mit ausreichender Sicherheit vorgenommen werden kann. Beispielsweise zeigt die Detektionsvorrichtung 100 das Klassifikationsergebnis dem Nutzer der Detektionsvorrichtung 100 über das Nutzerinterface 153 (MMI) an, der dann selbst entscheiden kann, ob er mit einem Klassifizierungsergebnis, z. B. der Klasse Ki, eine Hauptmessung Mi mit den Parametern Si, Pi, Wi vornehmen möchte oder ob er eine erneute Klassifikation eines Vorantwortsignals 131.1 wünscht. Ist dies der Fall, setzt der Klassifizierungsvorgang mit dem Vormessbetrieb 830 wieder ein.

Fig. 3 zeigt schließlich zusammenfassend ein Flussdiagramm zur schematischen Darstellung eines Detektionsverfahrens 900 zum Detektieren eines elektrisch und/oder magnetisch leitfähigen Objektes in einer Umgebung, insbesondere in einem Untergrund. Dieses weist gemäß den obigen Erläuterungen folgende Schritte auf:

In einem ersten Schritt 910 wird ein elektromagnetisches Sendesignal 120 in die Umgebung 300 mittels einer Sendeeinheit 110 ausgesendet. Dabei weist die Sendeeinheit 110 eine Anzahl von Sendern 112 in Form von Sendespulen auf. Vorliegend unterscheiden sich die Sender 112 der Sendeeinheit 110 jeweils in ihrer Position innerhalb der Sendeeinheit 110, in ihrer Größe, in ihrem Durchmesser und/oder in ihrer Stromtragfähigkeit voneinander.

In einem zweiten Schritt 920 folgt ein Erfassen eines vom ausgesendeten Sendesignal 120 und von der Beschaffenheit der Umgebung 300 abhängigen Antwortsignals 131. Jede der Anzahl Sendespulen 112 ist unabhängig von den jeweils übrigen Sendespulen 112 mit einem elektrischen Strom beaufschlagbar.

Bei dem Detektionsverfahren 900 wird in einem dritten Schritt 930 wenigstens eine der Sendespulen 112 in Abhängigkeit des Antwortsignals 131, insbesondere Vorantwortsignals 131.1, ausgewählt.

In einem vierten Schritt 940 wird die wenigstens eine ausgewählte Sendespule 112 mit einem elektrischen Strom beaufschlagt, um so ein weiteres, mittels der wenigstens einen ausgewählten Sendespule 112 adaptiertes Sendesignal 120 in die Umgebung 300 auszusenden.

In einem fünften Schritt 950 erfolgt ein Detektieren eines Objektes 200 in Abhängigkeit eines vom ausgesendeten weiteren Sendesignal 120 abhängigen Antwortsignals 131 (Hauptantwortsignal 131.2).

Fig. 4 zeigt in schematischer Darstellung einen Spulenkomplex 114 einer kombinierten Sende- und Empfangseinheit 110, 130 für einen Sensorkopf 101. Jeweils ein Sender 112 und ein Empfänger 132 sind als eine oder mehrere der Spulen A1, A2, H1-H4, $V_{11}$, $V_{21}$, $V_{31}$, $V_{41}$, $V_{12}$, $V_{22}$, $V_{32}$, $V_{42}$ in den Spulenkomplex 114 integriert. Der Spulenkomplex 114 ist mittels der Steuer- und Auswerteeinheit 160 zwischen einem Sendemodus, in dem mindestens eine Spule A1, A2, H1-H4, $V_{11}$, $V_{21}$, $V_{31}$, $V_{41}$, $V_{12}$, $V_{22}$, $V_{32}$, $V_{42}$ des Spulenkomplexes 114 ein Sendesignal 111 aussendet, und einem Empfangsmodus, in dem mindestens eine Spule A1, A2, H1-H4, $V_{11}$, $V_{21}$, $V_{31}$, $V_{41}$, $V_{12}$, $V_{22}$, $V_{32}$, $V_{42}$ des Spulenkomplexes 114 ein Empfangssignal 131 empfängt, schaltbar.

Der Spulenkomplex 114 weist beispielsweise zwei Spulenköpfe 114.1 und 114.2 auf - nämlich zwei ratiometrisch im Höhenabstand h angeordnete Sende- und Empfangsspulen, hier Spulen A1, A2. In diesen großen Spulen A1, A2 verschachtelt sind vier ratiometrisch angeordnete vertikale Spulen $V_{11}$, $V_{21}$, $V_{31}$, $V_{41}$ (der Spule A1 zugeordnet) sowie weitere vier ratiometrisch angeordnete vertikale Spulen $V_{12}$, $V_{22}$, $V_{32}$, $V_{42}$ (der Spule A2 zugeordnet) und vier horizontal angeordnete Spulen H1 bis H4, wobei letztere auf mittlerer Höhe zwischen den großen Spulen A1, A2 in relativ geringem Abstand zum Zentrum Z angeordnet und um 45° verkippt sind. In der Regel fungieren diese Spulen, oder zumindest ein Teil dieser, als Sendespulen für die Sendeeinheit 110 und auch als Empfangsspulen für die Empfangseinheit 130. Jede dieser in der Gesamtzahl vierzehn Spulen kann unabhängig von den übrigen Spulen mit einem elektrischen Strom beaufschlagt werden, also insbesondere auch als Sende- und Empfangsspule mittels Steuersignalen 140.1, 140.2 angesteuert werden. Außerdem kann die Empfangseinheit 130 Ströme, die in diesen Spulen durch das vom elektrisch leitfähigen Objekt 200 erzeugte sekundäre Magnetfeld induziert worden sind, synchron und parallel erfassen. Bevorzugt erfasst die Empfangseinheit 130 diese Ströme mit Hilfe eines schnellen Analog-Digital-Umsetzers, der beispielsweise eine Taktrate von 1 Megahertz (MHz) und eine Auflösung von 12 Bit hat. Die von der Empfangseinheit 130 erfassten Antwortsignale 131, also insbesondere das Vorantwortsignal 131.1 und das Hauptantwortsignal 131.2, sind somit einer digitalen Verarbeitung zugänglich. Die Regeleinheit 170 hat bevorzugt digitale Verarbeitungsmittel. Beispielsweise können die von der Empfangseinheit 130 erfassten Signale mit geeigneten Filtern gefiltert und angepasst werden. Außerdem kann die Empfangseinheit 130 gleichzeitig Summen- und Differenzsignale oder Verhältnisse der Signale zueinander bilden. Außerdem kann die Empfangseinheit 130 störende Gleichanteile im Signal oder sonstige Störungen digital beseitigen.

In Fig. 5 stellen zwei Graphen schematisch einen Sendestromverlauf (oberer Graph) und einen Spannungsverlauf (unterer Graph) in einer Sendespule dar. Zum Aussenden eines Sendesignals veranlasst der aus Steuer- und Auswerteeinheit 160, Regeleinheit 170 und Klassifizierungseinheit 180 gebildete Regler, vorliegend konkret die Regeleinheit 170, ein Beaufschlagen einer Sendespule mit Strom (I(t)) während einer festgelegten Bestromungsdauer 113. Soll mit dem ausgesendeten Sendesignal das Hauptantwortsignal 131.2 erfasst werden, so ist die Bestromungsdauer bevorzugt, wie bereits oben ausführlich erläutert, an die aktuelle Messumgebung angepasst, d. h. vom Regler, insbesondere der Klassifizierungseinheit 180, in Abhängigkeit eines zuvor erfassten Vorantwortsignals 131.1 bestimmt.

Der untere Graph zeigt einen Spannungsverlauf einer Spannung, die an einer Spule entsteht, die mit einem Strom beaufschlagt worden ist, der in etwa dem im oberen Graph dargestellten Verlauf angenommen hat. Der Verlauf der Spannung (U(t)) im linken Teil des unteren Graphen ergibt sich im Wesentlichen gemäß der Systemgleichung einer Spule, nämlich $U = L * \dfrac{di(t)}{dt}$ , wobei L die Induktivität der Sendespule ist. Der Spannungsverlauf im linken Teil des unteren Graphen ist demnach in etwa proportional zur Steigung des Stromverlaufs im oberen Graphen. Durch ein abruptes Abschalten des Stroms in der Sendespule zum Ende der Bestromungsdauer 113 entsteht eine stärkere Überspannung.

Wie oben erläutert, bewirkt das Beaufschlagen einer Sendespule mit einem in Fig. 5 dargestellten Stromimpuls ein Aussenden eines elektromagnetischen Sendesignals, welches in dem zu detektierenden Objekt Wirbelströme induziert, die ihrerseits ein sekundäres Magnetfeld erzeugen. Dieses sekundäre Magnetfeld erzeugt in der Sendespule, die nunmehr als Empfangsspule wirkt, einen elektrischen Strom, der wiederum eine Spannung in der Empfangsspule induziert, die in etwa einen im rechten Teil des unteren Graphen dargestellten Verlauf einnimmt. Mit dem Bezugszeichen 135 ist ein Messintervall gekennzeichnet, innerhalb dem die Empfangseinheit 130 einen Rauschanteil bestimmen kann (vgl. Fig. 6) und mit dem Bezugszeichen 133 ein Messzeitraum, innerhalb dem die Empfangseinheit das Hauptantwortsignal 131.2 erfasst. Sowohl der Messzeitraum 133 als auch das Messintervall 135 sind bevorzugt von der Regeleinheit 170 in Abhängigkeit des Vorantwortsignals 131.1 festgelegt.

Fig. 6 zeigt eine Möglichkeit für eine laufende Berechnung eines SNR-Wertes, der vorzugsweise vorliegt, bevor mit der Auswertung eines Antwortsignals 131 durch die Klassifizierungseinheit 180 und die Steuer- und Auswerteeinheit 160 des Sensorkopfes 101 begonnen wird. Das Ergebnis einer in Fig. 6 dargestellten Regelschleife liegt darin, dass ein Antwortsignal 131 soweit es als Hauptantwortsignal 131.2 zur Detektion eines Objekts 200 dient grundsätzlich oberhalb eines durch einen Schwellwert $SNR_{soll}$ festgelegten Signals zur Rauschschwelle liegt. Damit lassen sich Falschalarme sicher vermeiden und im Übrigen wir die Aussagekraft des Antwortsignals 131 erhöht.

Im Einzelnen erfolgt in einem Schritt 10 zunächst die Berechnung des Rauschens N auf einer beliebigen Spule A, beispielsweise der Spule A1 der Fig. 4. Das Rauschen N kann vorliegend aus der Varianz eines Signals bei Nichtbestromung der Spule A abgeschätzt werden.

Für die Bestimmung des im Schritt 10 beschriebenen Rauschens N bietet es sich an, einen in Fig. 5 ersichtlichen Zeitpunkt kurz vor einem Bestromen der Spule A1 oder A2 zu verwenden. Es reichen wenige Abtastpunkte aus, um die Varianz des Rauschens zu berechnen. Alternativ kann das Rauschen auch während des Bestromungsvorgangs, d. h. für einen mit 113 bezeichneten Bereich der Fig. 5 bestimmt werden.

In einem weiteren Schritt 20 wird eine weitere Spule A2 der Fig. 4 bestromt, die Signalstärke kann beispielsweise aus der Integration einer Wirbelstromantwort über ein gewisses Zeitintervall [$t_1$, $t_2$] oder aus einer Summe/Differenz der Wirbelstromantwort über mehrere definierte Intervalle bestimmt werden. Auch können Signale der Signalstärke bis zu einem k-ten Puls gemittelt werden. D. h. ein solches gemitteltes Signal ergibt sich nach dem k-ten Puls aus dem gemittelten Signal der Vorgängerpulse.

In einem vierten Schritt 40 kann ein SNR-Wert SNR(k) nach dem k-ten Puls berechnet werden, in dem ein Quotient oder sonstiges Verhältnis aus der im Schritt 30 errechneten Signalstärke und der im Schritt 10 errechneten Varianz gebildet wird.

Der im oben genannten Schritt 40 ermittelte SNR-Wert muss nicht für alle Spulen des Spulenkomplexes 114 berechnet werden. Vielmehr ist es ausreichend, für den Spulenkomplex 114 das Rauschen jeweils einer Gruppe von gleichartigen Spulen zu bestimmen. Dazu ist es ausreichend, wenn das Rauschen jeweils einer der Spulen der Gruppe bestimmt wird. Beispielsweise ist es ausreichend, ein Rauschen für die Spule A1, die Spule H1 und die Spule $V_{11}$ zu bestimmen.

Im Schritt 50 wird anschließend geprüft, ob der SNR-Wert SNR(k) oberhalb einer Rauschschwelle $SNR_{soll}$ liegt. Ist dies der Fall kann eine Auswertung des Antwortsignals 131 erfolgen und bei Bedarf ein weiteres Antwortsignal 131 mit einer nächsten Spule ermittelt werden. Gleiches gilt für den Fall, wenn die Anzahl der gemittelten Pulswerte k eine maximale Anzahl von Pulse $n_{max}$ erreicht hat. Auch in dem Fall wird ausgewertet, was praktisch einer Abbruchbedingung gleichkommt.

Sollte die Abfrage im Schritt 50 jedoch negativ sein, wird die Regelschleife mit dem Schritt 10 fortgesetzt und im Schritt 20 die Anzahl der Mittelungszyklen k, d. h. die Anzahl der für das Antwortsignal 131 gemittelten Pulse k um 1 erhöht - dies um gegebenenfalls in weiterer Prüfung im Schritt 50 einen ausreichend großen SNR-Wert SNR(k) zu erreichen oder aber die Maximalzahl von Pulsen $n_{max}$ zu erreichen.

Die in Fig. 6 beschriebene Regelschleife weicht ab von fest vorgegebenen Pulssequenzen mit fest vorgegebenen Bestromungs- und Messzeiten, da dadurch relativ viel Messzeit verloren geht, die besser genutzt werden kann. Mit der in Fig. 6 beschriebenen, bevorzugten Vorgehensweise hängt es von der spezifischen Qualität des Antwortsignals 131 ab, ob dieses verwendet werden kann. Liegen beispielsweise Objekte 200 in relativ geringer Überdeckung, so genügen bereits wenige Mittelungszyklen k, um ein gegebenes $SNR_{soll}$ zu erreichen, da die Signalstärke in solchen Fällen vergleichsweise groß ist. Eine für solche Fälle fix vorgegebene Zahl von Mittelungszyklen würde somit mit einer verschwendeten Messzeit einhergehen. Andererseits kann in einem solchen Fall die gewonnene Messzeit genutzt werden um einen langen Abfall der induzierten Wirbelströme zu nutzen, indem pro Strompuls relativ lange gemessen wird, nämlich vorzugsweise bis zu einer Millisekunde.

Es ist zu verstehen, dass die in Fig. 6 beschriebene Vorgehensweise nur ein Beispiel ist, um abhängig von der Qualität eines Antwortsignals 131 ein Messverfahren variabel zu gestalten. Eine entsprechende Parametervorgabe kann in einer Klasse K1... Kn gegeben sein.

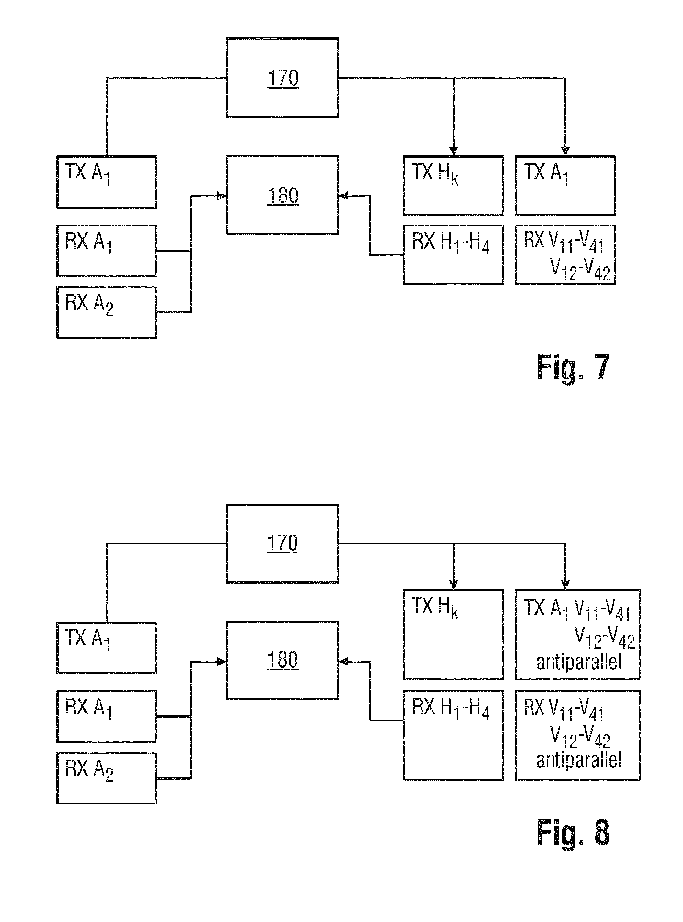

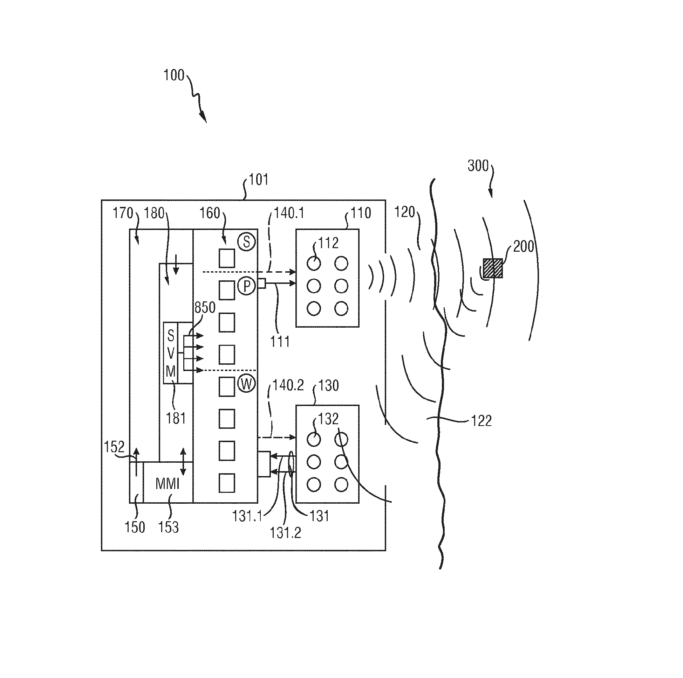

In Fig. 7 und Fig. 8 sind unterschiedliche Möglichkeiten aufgezeigt, die in Fig. 4 gezeigten Spulen eines Spulenkomplexes 114 zu verschalten. Die Verschaltung kann entsprechend einer Objekt- und Umgebungseigenschaft in verschiedenen Modi erfolgen. In Fig. 7 sind beispielhaft ein erster tiefenauflösender und ein zweiter hochauflösender Modus dargestellt. In Fig. 8 ist beispielhaft der erste tiefenauflösende und ein zweiter gitterauflösender, für verschweißte Gitter geeigneter Modus dargestellt. Der erste tiefenauflösende Modus ist insbesondere für eine Spulenkonfiguration für große Tiefen aber relativ geringer Separationsfähigkeit geeignet.

Vorliegend wird im ersten tiefenauflösenden Modus, der links in Fig. 7 und Fig. 8 dargestellt ist, mit einer vergleichsweise großen Spule A1 als Sendespule TX gearbeitet und diese gleiche Spule A1 kann als Empfangsspule RX oder es kann die weitere Spule A2 als Empfangsspule RX genutzt werden. Befindet sich nämlich kein Objekt 200 in der Nähe des Sensorkopfes 101, so wird normalerweise mit einer großen Spule A1 oder A2 gepulst, da diese die größte Reichweite aufweist.

Bezugnehmend auf Fig. 7 kann sich die Situation ergeben, in der ein Sensorkopf 101 sich einem Objekt 200 auf einen besonders geringen Abstand nähert und damit die Signalstärke eines Antwortsignals 131 eine gewisse Schwelle überschreitet. In dem Fall ist es sinnvoll, dass die Regeleinheit 170 in Kombination mit der Klassifizierungseinheit 180 den Sensorkopf 101 veranlasst, automatisch auf eine höhere Auflösung umzustellen, d. h. vorliegend höher auflösende Spulen des Spulenkomplexes 114 mit geringerer Reichweite zu nutzen.

Der Sensorkopf 101 wird mittels der Regeleinheit 170 und der Klassifizierungseinheit 180 dann automatisch aus dem ersten, tiefenauflösenden Modus in den zweiten, hochauflösenden Modus umgeschaltet. Im zweiten, hochauflösenden Modus können die Spulen des Spulenkomplexes 114 wahlweise als Sendespule (TX) oder Empfangsspule (RX) geschaltet werden; z.B. mittels einer Auswahl von Schaltungen, die wie folgt angegeben werden kann:

(a) Die vertikalen Spulen $V_{11}$, $V_{21}$, $V_{31}$, $V_{41}$ werden bestromt (TX) und es werden die Spulen $V_{12}$, $V_{22}$, $V_{32}$, $V_{42}$ (RX) gemessen oder umgekehrt;
(b) Die horizontalen Spulen H1 bis H4 werden bestromt (TX) und gemessen (RX).
(c) Die großen Spulen A1 oder A2 werden bestromt (TX) und die anderen Spulen $V_{11}$, $V_{21}$, $V_{31}$, $V_{41}$, $V_{12}$, $V_{22}$, $V_{32}$, $V_{42}$, H1 bis H4 und A1, A2 werden gemessen (RX).

(d) eine Kombination der in (a) bis (c) dargestellten Sequenzen.

Die Klassifizierungseinheit 180 kann vorliegend in Abhängigkeit von der Tiefe oder dem Durchmesser des Objekts 200 entweder den im linken Teil der Fig. 7 dargestellten ersten tiefenauflösenden Modus oder den auf der rechten Seite der Fig. 7 dargestellten zweiten hochauflösenden Modus in geeigneten Klassen K1... Kn vorgeben.

Bezugnehmend auf Fig. 8 kann es vorteilhaft sein hinsichtlich verschweißter Gitter auf eine Spulenkonfiguration umzuschalten, welche einen verschwindenden Fluss in einem Untergrund oder in einer sonstigen Umgebung 300 induziert. Dadurch wird vermieden, dass Wirbelströme in den Maschen des verschweißten Gitters induziert werden. Als Folge kann auf verschweißten Gittern korrekt lokalisiert werden, d. h. der Sensorkopf 101 zeigt z. B. Eisen korrekt an, nicht aber fälschlicher Weise in der Mitte einer Masche.

In dem Fall kann die Klassifizierungseinheit 180 in Kombination mit der Regeleinheit 170 umschalten zwischen dem vorbeschriebenen tiefenauflösenden Modus (z. B. gemäß (b): die horizontalen Spulen H1 bis H4 werden bestromt (TX) und gemessen (RX)) und einem gitterauflösenden Modus für eine Spulenkonfiguration (z.B. gemäß (a): die vertikalen Spulen $V_{11}$, $V_{21}$, $V_{31}$, $V_{41}$ werden bestromt (TX) und die vertikalen Spulen $V_{12}$, $V_{22}$, $V_{32}$, $V_{42}$ (RX) werden gemessen oder umgekehrt). Im gitterauflösenden Modus werden die vertikalen Spulen zur Bildung antiparallel ausgerichteter magnetischer Pole beschaltet - letzteres ist im rechten Teil der Fig. 8 symbolisch dargestellt. Zu dem letztgenannten Zweck werden vorliegend die vertikalen Spulen $V_{11}$, $V_{21}$, $V_{31}$, $V_{41}$, $V_{12}$, $V_{22}$, $V_{32}$, $V_{42}$ derart seriell zugeschaltet, dass die diesen zugeordneten magnetischen Pole antiparallel stehen. Steht dann der Sensorkopf 101 direkt über einer Masche eines verschweißten Gitters, so ist der totale Fluss durch die Masche identisch 0, sofern die Maschenweite größer als die Dimension des Sensorkopfes 101 ist. Zwar koppelt eine Masche sehr stark an eine Erregerspule (Sendespule) an, da in der Masche Ströme induziert werden, welche dem Erregerfeld entgegenwirken. Durch eine antiparallele Ausrichtung von jeweils zwei kleineren Spulen kann der Fluss durch die Masche jedoch zum Verschwinden gebracht werden. Es werden direkt über der Masche keine Ströme in der Masche induziert, so dass die Masche für den Sensorkopf als solche unsichtbar ist und lediglich das Eisen detektiert wird.

Die Erkennung - z.B. hier über eine Logik 181 mit einer Support-Vektor-Maschine SVM -, ob es sich um ein Gittermaterial, beispielsweise ein verschweißtes Gitter, handelt, erfolgt mittels der Klassifizierungseinheit 180, beispielsweise über die Analyse des Antwortsignals 131 bei verschiedenen Spulen. Es hat sich beispielsweise gezeigt, dass durch Auswertung der Signalstärken des Abklingverhaltens und der Krümmung eines Antwortsignals 131 mit hoher Zuverlässigkeit bestimmt werden kann, ob ein verschweißtes Gitter vorliegt oder nicht.

**Patentansprüche**

1.  Verfahren (900) zum Detektieren eines elektrisch und/oder magnetisch leitfähigen Objektes (200) in einer Umgebung (300) eines Sensorkopfes (101) einer Vorrichtung (100), aufweisend die Schritte:

    - Aussenden eines Sendesignals (120) in die Umgebung (300),
    - Empfangen eines von dem Sendesignal (120) und den Eigenschaften des Objektes (200) und der Umgebung (300) abhängigen Empfangssignals (122),
    - Auswerten eines aus dem Empfangssignal (122) gebildeten Antwortsignals (131), wobei

    das Detektieren gesteuert wird, durch

    - Bereitstellen eines Klassensystems (850) mit einer Anzahl von Klassen (K1-Kn), die sich in mindestens einer Objekt- und/oder Umgebungseigenschaft voneinander unterscheiden, und
    - Klassifizieren von aktuellen Objekt- und/oder Umgebungseigenschaften in Abhängigkeit des ausgewerteten Antwortsignals (131) in eine Klasse des Klassensystems (850),
    - Vorgeben von in der klassifizierten Klasse voreingestellten Detektionseigenschaften, wobei mit den vorgegebenen Detektionseigenschaften ein weiteres Antwortsignal detektiert wird.

2.  Verfahren nach Anspruch 1, **dadurch gekennzeichnet, dass** mittels des Klassensystems (850) aktuelle Objekt- und/oder Umgebungseigenschaften in Abhängigkeit des Antwortsignals (131) adaptiv klassifiziert werden.

3.  Verfahren nach Anspruch 1 oder 2, **dadurch gekennzeichnet, dass** wenigstens auf eine Amplitude (A) und/oder ein Signal-zu Rauschverhältnis (SNR) des Antwortsignals (131) als Regelgröße automatisch geregelt wird.

4.  Verfahren nach einem der Ansprüche 1 bis 3, **dadurch gekennzeichnet, dass** Objekt- und/oder Umgebungseigenschaften mehrfach neu klassifiziert und/oder unter Mittelung des Antwortsignals (131) klassifiziert werden.

5. Verfahren nach einem der Ansprüche 1 bis 4, **dadurch gekennzeichnet, dass** die Klassen (K1-Kn) eine oder mehrere der Klassen aufweisen, aus der Gruppe umfassend:

   - eine erste für Gitter vorgesehene Klasse;
   - eine zweite für dichte Objekte, insbesondere mit geringer Überdeckung, vorgesehene Klasse;
   - eine dritte für tiefe Objekte vorgesehene Klasse;
   - eine vierte für magnetische Untergründe vorgesehene Klasse;
   - eine fünfte für eine bestimmte Bewegungsrichtung vorgesehene Klasse;
   - eine sechste für nicht-magnetische, leitfähige Objekte vorgesehene Klasse.

6. Verfahren nach einem der Ansprüche 1 bis 5, **dadurch gekennzeichnet, dass** die Detektionseigenschaften umfassen: Sendeeigenschaften und/oder Empfangseigenschaften und/oder Auswerteeigenschaften; und das Detektieren gesteuert wird, indem

   - mit den eingestellten Sendeeigenschaften ein weiteres Sendesignal (120) ausgesendet, und/oder
   - mit den eingestellten Empfangseigenschaften ein weiteres Empfangssignal (122) empfangen, und/oder
   - mit den eingestellten Auswerteeigenschaften das weitere Empfangssignal (122) und/oder das aus dem weiteren Empfangssignal (122) gebildete weitere Antwortsignal (131) ausgewertet wird.

7. Verfahren nach einem der Ansprüche 1 bis 6, **dadurch gekennzeichnet, dass** das weitere Antwortsignal (131) in einem Regelschritt automatisch mittels den der Klasse zugeordneten Regeleigenschaften auf einen voreingestellten Soll-Wert einer Führungsgröße geregelt wird.

8. Verfahren nach einem der Ansprüche 1 bis 7, **dadurch gekennzeichnet, dass** bei Vorliegen einer Abbruchbedingung ein Regelschritt beendet und eine Startgruppe von Detektionseigenschaften eingestellt wird.

9. Vorrichtung (100) zum Detektieren eines elektrisch und/oder magnetisch leitfähigen Objektes (200) in einer Umgebung (300) eines Sensorkopfes (101) der Vorrichtung (100), insbesondere mittels einem Verfahren nach einem der Ansprüche 1 bis 8, aufweisend:

   - eine Sendeeinheit (110), die einen oder mehrere Sender (112) aufweist und zum Aussenden eines Sendesignals (120) in die Umgebung (300) ausgebildet ist,
   - eine Empfangseinheit (130), die einen oder mehrere Empfänger (132) aufweist und zum Empfangen eines von dem Sendesignal (120) und den Eigenschaften des Objektes (200) und der Umgebung (300) abhängigen Empfangssignals (122) ausgebildet ist,
   - eine Steuer- und Auswerteeinheit (160), die zum Steuern der Sende- und Empfangseinheiten (110, 130) und zum Auswerten eines von der Empfangseinheit (130) aus dem Empfangssignal (122) gebildeten Antwortsignals (131) ausgebildet ist,

   weiter **gekennzeichnet durch**

   - eine ein Klassensystem (850) nutzende Klassifizierungseinheit (180) in der Objekt- und/oder Umgebungseigenschaften in Klassen klassifiziert sind, wobei das Klassensystem (850) ein Anzahl von Klassen (K1-Kn) aufweist, die sich in mindestens einer Objekt- und/oder Umgebungseigenschaft voneinander unterscheiden, und wobei einer Klasse voreingestellte Detektionseigenschaften für die Vorrichtung zugeordnet sind.

10. Vorrichtung nach Anspruch 9, **dadurch gekennzeichnet, dass** die Umgebungseigenschaften eine Beschaffenheit einer Umgebung des Objektes, insbesondere eine Leitfähigkeit und/oder Permeabilität des Untergrundes, und/oder relative Eigenschaften zwischen dem Sensorkopf (101) und dem Objekt (200), insbesondere Distanz, relative Lage und geometrische Anordnung, umfassen.

11. Vorrichtung nach Anspruch 9 oder 10, **dadurch gekennzeichnet, dass** die Objekteigenschaften Materialeigenschaften, insbesondere Leitfähigkeit oder Permeabilität, und/oder Geometrieeigenschaften, insbesondere Durchmesser, des Objektes umfassen.

12. Vorrichtung nach einem der Ansprüche 9 bis 11, **dadurch gekennzeichnet, dass** die Sendeeigenschaften der Sendeeinheit (110) für jede Klasse (K1-Kn) und jeden Sender (112) Senderparameter, mit denen jeder der Sender (112) betreibbar ist, umfassen, insbesondere die Senderparameter einen oder mehrere der Parameter umfassen, die ausgewählt sind aus der Gruppe bestehend aus: Pulsrepetitionsfrequenz, Pulsamplitude, Pulspolarität, Bestromungsdauer.

13. Vorrichtung nach einem der Ansprüche 9 bis 12, **dadurch gekennzeichnet, dass** die Empfangseigenschaften der Empfangseinheit (130) für jede Klasse (K1-Kn) und jeden Empfänger (132) Empfängerparameter, mit denen jeder der Empfänger (132) betreibbar ist, umfassen, insbesondere die Empfängerparameter einen oder mehrere der Parameter umfassen, die ausgewählt sind aus der Gruppe bestehend aus: Filtereigenschaften, Verstärkereigenschaften, Gate-Startzeitpunkt und Gate-Zeitdauer, Mittelungszeit bzw. Anzahl der Mittelungszyklen.

14. Vorrichtung nach einem der Ansprüche 9 bis 13, **dadurch gekennzeichnet, dass** die Auswerteeigenschaften für die Steuer- und Auswerteeinheit (160) für jede Klasse (K1-Kn) einen oder mehrere der Parameter umfassen, die ausgewählt sind aus der Gruppe bestehend aus: Mittelungszeiten, Integrationszeiten, Filterkoeffizienten.

15. Vorrichtung nach einem der Ansprüche 9 bis 14, **dadurch gekennzeichnet, dass** eine Regeleinheit (170) zum automatischen, insbesondere nicht-manuellen, Regeln wenigstens des Antwortsignals (131) als Regelgröße ausgebildet und mit der Klassifizierungseinheit (180) sowie der Steuer- und Auswerteeinheit (160), insbesondere zusätzlich der Sendeeinheit (110) und/oder der Empfangseinheit (130), unter Bildung eines Regelkreises regelverbunden ist.

16. Vorrichtung nach einem der Ansprüche 9 bis 15, **dadurch gekennzeichnet, dass** jeder Klasse (K1-Kn) des Klassensystems (850) voreingestellte Regeleigenschaften für eine Regeleinheit (170) zugeordnet sind, insbesondere die Regeleigenschaften als Stellgröße einen oder mehrere Regelparameter umfasst, aus der Gruppe bestehend aus: Pulsrepetitionsfrequenz, Pulsamplitude, Pulspolarität, Bestromungsdauer; Mittelungszeiten, Integrationszeiten, Filterkoeffizienten; Filtereigenschaften, Verstärkereigenschaften, Gate-Startzeitpunkt und Gate-Zeitdauer, Mittelungszeit bzw. Anzahl von Mittelungszyklen.

17. Vorrichtung nach einem der Ansprüche 9 bis 16, **dadurch gekennzeichnet, dass** jeweils ein Sender (112) und ein Empfänger (132) als eine oder mehrere Spulen (A1, A2, H1-H4, $V_{11}$-$V_{41}$, $V_{12}$-$V_{42}$) in einem Spulenkomplex (114) integriert sind, wobei der Spulenkomplex (114) mittels der Steuer- und Auswerteeinheit (160) zwischen einem Sendemodus, in dem eine Spule des Spulenkomplexes (114) ein Sendesignal (111) aussendet, und einem Empfangsmodus, in dem eine Spule des Spulenkomplexes (114) ein Empfangssignal (131) empfängt, schaltbar ist.

EP 2 533 073 A2

Fig. 1

22

# Fig. 2

**Fig. 3**

910
920
930
940
950

900

**Fig. 4A**

112.2    Z
112.1    112.1
V$_{21}$
H2    H1
112.2    V$_{31}$    V$_{11}$    112.2
H3    H4
112.1    114
V$_{41}$    112.1
112.2

**Fig. 4B**

V$_{31}$    V$_{41}$    V$_{21}$    V$_{11}$    A1
114.1
h
114.2
V$_{32}$    V$_{42}$    Z    V$_{22}$    V$_{12}$    A2

EP 2 533 073 A2

Fig. 5

25

10 — Berechne
Rauschen N
auf Spule A

20 — Bestrome
Spule B
$n = n + 1$

30 — Berechne
Signal s(k) auf
Spule A

40 — Berechne
Signal SNR(k)

50 — $SNR(k)$
$> SNR_{soll}$ oder
$k > n_{max}(A)$

Nächste
Spule

## Fig. 6

**Fig. 7**

**Fig. 8**

**IN DER BESCHREIBUNG AUFGEFÜHRTE DOKUMENTE**

**In der Beschreibung aufgeführte Patentdokumente**

- DE 69917030 T2